# EUROPEAN PATENT APPLICATION

(11) **EP 2 401 919 A2**
(43) Date of publication of application: **04.01.2012**
(21) Application number: 11181500.7
(22) Date of filing: 15.08.2007
(51) Int. Cl.: A21D 2/14, A21D 2/16, A21D 2/18, A21D 2/22, A21D 2/26, A21D 8/04, A21D 10/00, A21D 10/02, A21D 13/00

(54) **Dough composition comprising rye flour and gluten and rye flour bakery product**

(30) Priority: 22.08.2006 GB 0616661; 30.01.2007 GB 0701769; 02.02.2007 US 887854 P; 09.07.2007 GB 0713298; 09.07.2007 US 948550 P; 11.07.2007 ZA 200705714
(62) Divisional of application: 07825581.7
(71) Applicant: Danisco A/S, 1001 Copenhagen K (DK)
(72) Inventor: Johansen, Lisbeth Hoej, 8700 Horsens (DK)
(74) Representative: Harding, Charles Thomas

(57) **Abstract**

A dough is described. The dough has a high percentage of rye flour.

## Description

The present invention relates to a composition for use in making food products, as well as food products made therefrom.

In particular, the present invention relates to a composition for use in making food products, as well as food products made therefrom, wherein the composition comprises (or is made from) a high percentage of a cereal grain wherein the cereal grain is rye.

Rye flour is used to produce bakery products, such as baked products. These products have distinct characteristics and are quite different to bakery products (e.g. baked products) produced using high levels of wheat flour.

However, rye flour has characteristics which make it less suitable for use by itself in the production of bakery products (e.g. baked products). For example, rye bakery products are often more dense and compact in texture with a sour and bitter taste.

To overcome these problems rye flour is usually used in combination with wheat flour. Moreover, in the case of bread making, it is typical to use only low percentages of rye flour in order to produce rye bread with acceptable volume. Typical recipes recommend in a dough to use not more than 20 percent dark rye flour, or not more than 30 percent medium rye flour, or not more than 40 percent light rye flour. Here, "percent" is Bakers' percent; which is discussed later.

We have found that one of the characteristics of rye flour that makes it less suitable for use in the production of bakery products (e.g. baked products) is that it does not contain gluten which prevents the formation of a gluten protein network. As an example of the effect of the lack of a gluten protein network, loaves of bread made from dough in which the only flour is rye flour are small and compact.

We have found that another characteristic of rye flour that makes it less suitable for use in the production of bakery products (e.g. baked products) is that the formation of a starch network is hampered due to the high endo-amylase activity in rye flour, which results in starch degradation. The degree of starch degradation in dough is correlated with the viscosity, which can be measured by an amylograph or a Rapid Viscosity Analyzer (RVA). The longer the starch molecules, the better the starch network and the higher the viscosity. Accordingly, if starch viscosity is too low during baking it will influence pore structure of the baked product as air diffuses too fast or goes all together. Furthermore, it has an effect on the stability of the cooled product.

Another characteristic of rye flour is that it ferments more readily than wheat flour as it contains a greater percentage of natural sugars, diastase and protease enzymes and has a slightly higher natural acidity than wheat flour.

Another characteristic of rye flour baked products is that they do not have as high a water content as wheat based baked products. The water content of the rye flour baked product also affects the distribution of water in the rye flour baked product. Water content can be measured by standard heating and weight loss measurements, whilst water distribution can be analysed by using NMR to observe water activity.

These characteristics make rye flour unsuitable for use with yeast alone. Normally sourdough (leaven) is used in rye flour bakery products (e.g. rye flour baked products) to stabilize them instead. The sourdough (leaven) works by reducing the negative effects of endo-amylases, which are naturally present in rye flour and break down the starch during the baking process. The sourdough (leaven) also lowers the pH of the dough. It is well known that the pH affects the starch gelatinisation (reference: "Mig og mit rugbr⌀d" by Agnete Dal Thomsen ISBN 87-87436-59-2). At lower pH the starch gelatinisation is delayed thereby giving the amylases less time to degrade the starch during baking due to heat denaturation of the amylases. Amylases can only act on the starch granules that already have been broken down or when the starch begins to gelatinise. So a mechanism of reduced action of the endo-amylases using sourdough (leaven) is that the starch gelatinises later as a consequence of reduced pH. Therefore the degree of starch gelatinisation and breakdown is reduced. A similar effect can be obtained by the use of pasteurised cultures or by addition of acids such as citric acid and lactic acid. The higher starch levels and reduced pH allow the starch to partially gelatinize and retain gas bubbles in the dough. It is also an object of the present invention to provide means for preventing starch hydrolysis in spite of a pH in the dough of between 5 and 7.5.

US 2006/0134270 (Kunze et al) attempts to address some of the problems associated in making breads from rye flour ("sometimes called rye breads"). However, recipies in that document do not work - sometime yielding runny dough textures. We present herein studies that show this.

The present invention alleviates the problems of the prior art.

In broad aspects, the present invention provides:
a flour composition containing a high percentage of a flour made from rye;
a bakery product containing or made from a high percentage of a flour made from a cereal grain wherein the cereal is rye;
a baked product containing or made from a high percentage of a flour made from a cereal grain wherein the cereal is rye.

Rye is typically classified as the species *Secale cereale.*

The term 'bakery product' refers to the resultant product that is baked to make the baked products or to the baked product itself. For example, the bakery product of the present invention is a dough that has been allowed to stand for a period of time - such as for 60 minutes.

In a preferred aspect, the bakery product is a baked product.

The term "baked product" means a product that has been baked. Typical baked products include bread products, such as leavened bread products. Preferred baked products according to the present invention include: bread loaves, Pan bread, pizza bases, rolls, hamburger buns, tortillas, crackers, crispbread, wafers, croutons or toast bread; baguette, grissini (bread sticks), Danish pastries; croissants, biscuits; cookies; cakes such as sponge cakes, poundcakes, muffins, cake donuts, or cupcakes; yeast raised sweet goods such as brioche, panettone, berliner, cinnamon rolls, yeast, raised donuts, or pastry, muffins and extruded products.

In one aspect, preferably the baked product is toast or Pan bread

In further broad aspects, the present invention provides:
Process for making, and uses of, the flour composition containing a high percentage of a flour made from a cereal grain wherein the cereal is rye;
Process for making, and uses of, the bakery product containing or made from a high percentage of a flour made from a cereal grain wherein the cereal is rye;
Process for making, and uses of, the baked product containing or made from a high high percentage of a flour made from a cereal grain wherein the cereal is rye.

In one broad aspect, the present invention provides a dough for preparing a bakery product (e.g. a baked product), said dough comprising a high level of rye flour, exogeneous gluten and a leavening agent.

The term "exogeneous gluten" means gluten that is added as an additive and not when present in, for example, wheat - such as in the endosperm thereof (which is endogeneous gluten). In other words, the gluten is added free of naturally associated non-gluten proteins. For example, the gluten is typically added in a purified state. Gluten is a mixture of proteins found combined with starch in the endosperm of some cereals, notably wheat. It constitutes about 75% of the proteins contained in wheat, and is composed of the proteins gliadin and glutenin. In dough made from wheat flour gluten proteins form a cross-linked network that is elastic and traps carbon dioxide produced in by the leavening agents. Trapped bubbles of carbon dioxide allow the dough to rise and result in a larger loaf-volume and better consistency of bread.

In a preferred aspect, the exogeneous gluten is vital gluten. Vital gluten is gluten purified from wheat by washing out the starch fraction from wheat flour and recovering the insoluble protein fraction. Vital gluten is added to the flour to strengthen it. Vital gluten is widely commercially available.

It is to be noted that US 2006/0134270 (sometimes referred to herein as "Kunze" or "Kunze *et al")* does not teach the addition of exogeneous gluten.

In another broad aspect, the present invention provides the use of an emulsifier in the preparation of a dough comprising rye flour.

It is to be noted that Kunze does not teach the addition of an emulsifier.

In another broad aspect, the present invention provides a dough for preparing a bakery product (e.g. a baked product), said dough comprising rye flour, a leavening agent and an encapsulated acidifier.

The acidifier may be an acid (such as citric acid, tartaric acid, lactic acid, ascorbic acid, fumaric acid) or an agent that releases acid. Further examples of acidifiers include sour dough, gluco delta lactone (GDL). If encapsulated, the acidifier is encapsulated to an extent that the acidifier is not released whilst in the dough phase but that on baking the acidifier is released. In some instances, an acidifier is used to - for example - prolong the shelf life of the resultant baked product.

Encapsulation is a process of surrounding or coating an ingredient with a substance in order to prevent or delay the release of the ingredient until a certain time or set of conditions is achieved. Applications for this technique have increased in the food industry since the encapsulated materials can be protected from moisture, heat or other extreme conditions, thus enhancing their stability.

A wide variety of ingredients have been encapsulated - such as flavouring agents, acids, bases, artificial sweeteners, colourants, preservatives, leavening agents, antioxidants, agents with undesirable flavours, odours and nutrients, among others.

Various techniques are employed to form the capsules, including spray drying, spray chilling or spray cooling, extrusion coating, fluidized bed coating, liposome entrapment, coacervation, inclusion complexation, centrifugal extrusion and rotational suspension separation.

Fats, emulsifiers, starches, dextrins, alginates, protein and lipid materials can be employed as encapsulating materials.

Various methods exist to release the ingredients from the capsules. Release can be site-specific, stage-specific or signaled by changes in pH, temperature, irradiation or osmotic shock. For example, in baking chemical leavening agents are encapsulated to delay their release until the bread reaches a certain temperature during baking.

It is to be noted that Kunze does not teach the addition of an encapsulated acidifier.

For ease, the present invention will now be described by a first aspect, a second aspect and a third aspect. It is to be noted that the commentary under each respective aspect (e.g. discussion of specific and/or preferred embodiments, definitions, teachings etc.) is applicable to each of the other aspects.

The pH of the dough according to the present invention is within the range of pH 5 to pH 7.5. Accordingly, if an acidifier is added to the dough, it must either be i) a delayed release acidifier (sometimes referred to as a slow release acidifier) and/or ii) an acidifier which is encapsulated to the extent that the acidifier is not/or less released in the dough but during baking.

By the term "delayed release acidifier" is intended to mean that the acid is a less (not fast) soluble acid, which will influence the pH of the dough system. Examples of suitable delayed release acidifiers include fumaric acid, gluco delta lactone (GDL), ascorbic acid.

The optimal release of the acid is around or after the denaturation of protein/gluten, as the negative impact on gluten development and strength will be less. During baking this occurs around or above 50-65 degree C.

As indicated above, acidifiers that are not sufficiently delayed in releasing so that they will be released in the dough can also be used, provided that they are suitably encapsulated. Such acidifiers include citric acid, lactic acid, tartaric acid, maleic acid, succinic acid.

For some aspects of the present invention, the term "x% (bakers' %)" is used. Bakers' % amounts are amounts that are measured by taking the total flour added as being 100% and the remaining ingredients are quoted in relative % amounts. Thus, in these instances, the cereal flour is always 100% and the remaining components are based on the amount of cereal flour. By way of example, if the composition of a dough comprises 100 g cereal flour and 5 g exogeneous gluten, then the % amounts are expressed as 100% (bakers' %) cereal flour and 5% (bakers' %) exogenous gluten. By way of a further example, if the composition of a dough comprises 80 g rye cereal flour, 20 g wheat cereal flour and 5 g exogeneous gluten, then the % amounts are expressed as 80% (bakers' %) rye cereal flour, 20% (bakers' %) wheat cereal flour and 5% (bakers' %) exogenous gluten.

The term "gluten strengthener" means ingredients, which are able to influence/interact with the gluten network and thereby stabilise the gluten system. This means that the gluten system/dough system will be more tolerant towards mechanical treatment, process variation and improve the ability to retain CO₂ in the dough system. Those skilled in the art can readily determine if an entity (such as an emulsifier) has gluten strengthening properties.

The term "shortening" means a 100% fat product (plastified fat or a fat blend or a fat and emulsifier bland), which by definition contains no water. The shortening is formulated with animal and/or vegetable oil/fat that have been carefully processed for functionality and to remove undesirable flavour.

The term "anti-staling agent" (sometimes referred to as a "softening agent") means an ingredient, which is able to delay the staling rate of bread. Often staling is related to starch retrogradation and by use of anti-staling agents you are able to delay the retrogradation/recrystalisation of starch. The agent keeps the bread soft for a longer period.

The term "dough strengthening enzyme" means an enzyme, which is able to influence/interact with the gluten network or flour components associated with the gluten network and thereby stabilise the gluten system and strengthening the dough system. This makes the gluten system/dough system more tolerant towards mechanical treatment and process variation; and improves the ability to retain CO₂ in the dough system.

### First Aspect

According to a first aspect there is provided a dough comprising:
System (a); and
System (b);
wherein System (a) comprises
   (i) cereal flour, wherein at least 80% (bakers' %) of the cereal flour is rye flour; and
   (ii) exogenous gluten, wherein the exogeneous gluten is present in an amount of at least 5% (bakers' %) by weight of the cereal flour of System (a)(i);
wherein the dough is at a pH from about pH 5 to about pH 7.5;
wherein System (b) comprises at least a leavening agent;
wherein if System (a)(ii) comprises from 5% (bakers' %) to 9% (bakers' %) by weight of the cereal flour of System (a)(i) of exogeneous gluten then the dough additionally comprises System (c);
wherein System (c) comprises at least one gluten strengthener;
wherein if System (a)(ii) comprises more than 9% (bakers' %) by weight of the cereal flour of System (a)(i) of exogeneous gluten then the dough optionally comprises System (c), wherein System (c) comprises at least one gluten strengthener.

The term "System" has been used to denote a component of the dough composition. The System itself may be multi-component (such as at least System (a)). The System may be just one component (such as for some applications, at least System (b)). The System may be in a dry state or in a wet state - depending on the respective application.

The gluten in system (a)(ii) is exogeneous gluten - namely gluten that is added as an ingredient in its own right, as opposed to being part of another natural additive (which is referred to as endogeneous gluten), such as wheat. However, System (a)(i) and/or System (d) may comprise endogeneous gluten.

The dough may contain an acidifier but the pH of the dough is always within the pH range of from about pH 5 to about pH 7.5. The acidifier may be a slow acting acidifier - such as fumaric acid or gluco delta lactone. In baking, however, the pH may drop. This may be due to the presence of encapsulated acidifiers in the dough being released during the baking stage.

However, preferably the dough does not contain an acidifier and/or a dough available acidifier. The term "dough available acidifier" means an acidifier that can act in the dough phase.

If the bakery product of the present invention is a dough that has been allowed to stand for a period of time then the bakery product is still a dough and the pH of that dough is still within the pH range of from about pH 5 to about pH 7.5.

Even though System (c) is an optional feature for gluten levels in System (a)(ii) more than 9% (bakers' %), it is still a preferred feature. Thus, preferably the dough comprises:
said System (a);
said System (b); and
said System (c).

Preferably, the dough additionally comprises System (d); wherein System (d) comprises at least one or more dough additives. Here, the dough additives may be typical dough additives, such as one or more of: water and/or milk and/or shortening (e.g. butter) and/or olive oil and/or margarine and/or eggs and/or at least one enzyme; at least one flavouring; at least one delayed release acidifier; at least one type of kernel; at least one fruit piece; at least one type of shortening or oil; at least one type of cereal grain and/or at least one hydrocolloid and/or at least one emulsifier and/or at least one type of fat and/or at least one sugar and/or salt and/or at least one anti-staling agent and/or at least one softening agent and/or another cereal flour (such as wheat flour); and/or at least one maltextract (enzyme and/or non enzymatic; liquid and/or solid (e.g. active powder)); and/or at least one syrup; and/or at least one vegetable; and/or at least one yeast food (such as for example, calcium sulphate and mono calcium phosphate); and/or at least one preservative (such as for example calcium propionate); and/or at least one or more oxidative agents (enzymatic and/or non-enzymatic); and/or one or more reducing agents (enzymatic and/or non-enzymatic).

Preferably, the dough additionally comprises System (d); wherein System (d) comprises at least the following dough additives: water, salt and sugar.

Preferably, the dough additionally comprises System (d); wherein System (d) comprises at least the following dough additives: water, salt, sugar, hydrocolloid enzyme and an emulsifier.

A preferred dough comprises:
said System (a);
said System (b); and
said System (d).

Another preferred dough comprises:
said System (a);
said System (b);
said System (c); and
said System (d).

In component (a)(ii) of System (a) the gluten may be any suitable gluten that can be used as an additive. In a preferred aspect, the gluten is Vital gluten.

The leavening agent in System (b) may be any suitable leavening agent - such as chemical and/or biological leavening agent.

Leavening agents are substances used in doughs and batters that cause a foaming action. The leavening agent produces gas, usually carbon dioxide, that becomes trapped as bubbles within the dough. When a dough or batter is baked, it "sets" and the holes left by the gas bubbles remain, giving breads, cakes, and other baked goods their soft, sponge-like textures. The main types of leavening agents are biological, such as yeasts and sourdoughs, and chemical, for example baking powder.

### Biological leavening agents

Microorganisms that release carbon dioxide as part of their lifecycle can be used to leaven products.

Varieties of yeast, in particular *Saccharomyces cerevisiae,* but sometimes also wild yeasts, are the most common biological leavening agents used in baking. Yeasts ferment the sugars present in the dough and produce carbon dioxide as a byproduct. This causes the dough to expand or rise as the carbon dioxide forms bubbles, which are trapped by the gluten network in dough. When the bread is baked it sets leaving holes, which give the bread a soft and spongy texture. The use of sugar in bread dough accelerates the growth of yeasts. Salt and fats such as butter slow down yeast growth. Yeast also leaves behind other metabolic byproducts that contribute to the distinctive flavor of yeast breads.

Another popular leavening agent used in bread making is sourdough, which is a symbiotic culture of lactobacilli or acetic acid bacteria with yeasts. Sourdough bread has a distinctively tangy taste, due mainly to the lactic acid and acetic acid produced by the bacteria. Sourdoughs have been used for thousands of years, in particular they are the traditional leavening ingredient used in breads containing a high percentage of rye flour.

Some examples of products that are commonly used as biological leaveners are: unpasturised beer, buttermilk, ginger beer, kefir, sourdough starter, yeast, yogurt, spontaneous sourdough, and sourdough based on starter cultures.

### Chemical leavening agents

Chemical leavening agents are chemical mixtures or compounds that typically release carbon dioxide when they react in the presence of moisture, heat, or acidity. Chemical leavening agents are often used in quick breads and cakes. Chemically leavened doughs and batters usually require light handling and must be baked very soon after mixing as the carbon dioxide is released quickly.

Examples of chemical leavening agents include: baking powder, baking soda (sodium bicarbonate), potassium bicarbonate, ammonium bicarbonate, potassium carbonate (potash), calcium carbonate, potassium bitartrate (cream of tartar), potassium carbonate (pearlash), monocalcium phosphate (MCPM), monoammonium phosphate (MAP), diammonium phosphate (DAP), sodium acid pyrophosphate (SAPP), anhydrous monocalcium phosphate (AMCP), dicalcium phosphate dihydrate (DCPD), sodium aluminium phosphate (SALP), sodium aluminium sulfate (SAS), glucono delta lactone (GDL), citric acid, tataric acid, fumaric acid, lactic acid. acidic sodium citrate (monosodium citrate).

Preferably, the leavening agent is an exogeneous yeast. The term "exogeneous yeast" means yeast that is added as an additive in its own right, as opposed to being a part of another natural additive (such as endogeneous yeast on, say, the rye flour).

Preferred examples of yeasts include bakers yeast, compressed yeast, yeast cream, granulated yeast, dry yeast, instant yeast. Preferably, the leavening agent in System (b) is at least bakers yeast.

The gluten strengthener in System (c) is capable of strengthening the gluten-gluten protein interactions by increasing the inter-binding thereof.

Testing for gluten strengtheners is straightforward - and can be done by measuring the rheological properties of gluten with and without the strengthener. In addition, or alternatively, it is possible to measure the rheological properties of a dough comprising gluten with and without the strengthener. The rheological properties can be measured by use of e.g. a Barbender Extensograph, a Texture Analyser Kieffer Rig, a Chopin Alveograph.

Preferably, the gluten strengthener in System (c) is at least a gluten strengthener emulsifier and/or a gluten strengthener enzyme and/or a gluten strengthener chemical oxidant.

Preferably, if the gluten strengthener in System (c) is an emulsifier then the emulsifier is typically present in an amount of from 0.1% (bakers' %) to 2% (Bakers' %).

Preferably, if the gluten strengthener in System (c) is an enzyme then the enzyme is typically present in an amount of from 5 ppm to 1000 ppm, based on flour weight.

Preferably, the gluten strengthener in System (c) is at least a lipase and/or at least a xylanase and/or at least a hemicellulase and/or at least an oxidative enzyme and/or at least a chemical oxidising agent.

Preferably, if the gluten strengthener in System (c) is an emulsifier then the emulsifier is typically present in an amount of from 0.1% (bakers' %) to 2% (Bakers' %).

Preferably, if the gluten strengthener in System (c) is an enzyme then the enzyme is typically present in an amount of from 5 ppm to 1000 ppm, based on flour weight.

Preferably, the gluten strengthener in System (c) is at least a lipase and/or at least a phospholipase and/or at least a glycolipase.

Preferably, the gluten strengthener in System (c) is at least a lipase.

Preferably, if the gluten strengthener in System (c) is a lipase then the enzyme is typically present in an amount of from 5 ppm to 500 ppm, based on flour weight.

Examples of enzymes for use in the present invention include Lipopan F (from Novozymes), TS-E 1367 (from Danisco).

The gluten strengthener can be any suitable emulsifier. Examples include DATEM, SSL, CITRIM, Polysorbate, sugar ester, lecithin.

Preferably the gluten strengthener in System (c) is at least DATEM, SSL, CSL, Polysorbate, CITRIM, glucose ester (sugar ester), lecithin, ethoxylated monoglyceride (EMG), succinic acid ester of monoglyceride (SMG).

System (d) may comprise one or more of: water and/or milk and/or shortening (e.g. butter) and/or olive oil and/or margarine and/or eggs and/or at least one enzyme; at least one flavouring; at least one delayed release acidifier; at least one type of kernel; at least one fruit piece; at least one type of shortening or oil; at least one type of cereal grain and/or at least one hydrocolloid and/or at least one emulsifier and/or at least one type of fat and/or at least one sugar and/or salt and/or at least one anti-staling agent and/or at least one softening agent and/or another cereal flour (such as wheat flour); and/or at least one maltextract (enzyme and/or non enzymatic; liquid and/or solid (e.g. active powder)); and/or at least one syrup; and/or at least one vegetable; and/or at least one yeast food (such as for example, calcium sulphate and mono calcium phosphate); and/or at least one preservative (such as for example calcium propionate); and/or at least one or more oxidative agents (enzymatic and/or non-enzymatic); and/or one or more reducing agents (enzymatic and/or non-enzymatic).

Preferably System (d) comprises at least one hydrocolloid - such as xanthan, carrageenan, starch, modified starch, pectin, alginate, gelatine, locust bean gum (LBG), gellan, HPMC, CMC, guar gum, depolymerised guar, acacia gum, konjac gum, agar, tamarind, tragacanth, beta-glucan, arabinoxylan, wheat fibre, apple fibre, karaya, curdlam, chitosan, soluble and non-soluble fibre and combinations thereof.

Preferably the hydrocolloid is xanthan.

System (d) may comprise at least one delayed release acidifier. Typical delayed release acidifiers include gluco delta lactone and/or acids such as fumaric acid and/or ascorbic acid. The delayed release acidifier may be an encapsulated acidifier - such as any one or more of gluco delta lactone and/or acids such as fumaric acid and/or ascorbic acid and/or lactic acid, and/or citric acid, and/or tartaric acid, and/or maleic acid, and/or succinic acid.

The delayed release acidifier will not lower the pH below pH 5 during the dough phase. A preferred example of a delayed release acidifier is at least one encapsulated acid.

For some embodiments, System (d) comprises at least one emulsifier. The emulsifier may be selected from the group consisting of distilled monoglycerides; monoglycerides; diglycerides; esters of mono- and diglycerides; polyglycerol esters of fatty acids; polyglycerol polyrincinoleate; propylene glycerol esters of fatty acids; sorbitan monostearates; sorbitan tristearates; sodium stearoyl lactylates; calcium stearoyl lactylates; lecithins; and diacetyl tartric acid esters of mono- and diglycerides, acetic acid ester of mono- and diglyceride, polysorbate, ethyxolated monoglyceride

(EMG), succinic acid ester of monoglyceride (SMG), sugar ester and combinations thereof.

Preferably, the emulsifier is a monoglyceride.

Preferably, the emulsifier is a crumb softening emulsifier.

Preferably, wherein may System (d) comprise at least the following dough additives: water, salt and sugar.

Preferably, System (a)(i), comprises at least 82% (bakers' %) rye flour.

Preferably, System (a)(i) comprises at least 84% (bakers' %) rye flour.

Preferably, System (a)(i) comprises at least 86% (bakers' %) rye flour.

Preferably, System (a)(i) comprises at least 88% (bakers' %) rye flour.

Preferably, System (a)(i) comprises at least 90% (bakers' %) rye flour.

Preferably, System (a)(i) comprises at least 92% (bakers' %) rye flour.

Preferably, System (a)(i) comprises at least 94% (bakers' %) rye flour.

Preferably, System (a)(i) comprises at least 96% (bakers' %) rye flour.

Preferably, System (a)(i) comprises at least 98% (bakers' %) rye flour.

Preferably, System (a)(i) comprises 100% (bakers' %) rye flour.

Preferably, System (a)(ii) comprises at least 6% (bakers' %) by weight of the cereal flour of System (a)(i) of gluten.

Preferably, System (a)(ii) comprises at least 8% (bakers' %) by weight of the cereal flour of System (a)(i) of gluten.

Preferably, System (a)(ii) comprises at least 10% (bakers' %) by weight of the cereal flour of System (a)(i) of gluten.

Preferably, the dough is at a pH from about pH 5.2 to about pH 7.

Preferably, the dough is at a pH from about 5.4 to about pH7.

Preferably, the dough is at a pH from about 5.4 to about pH6.5.

For some aspects, preferably the dough is at a pH from about 5.5 to about pH6.2.

For some aspects, preferably the dough is at a pH from about 5.5 to about pH5.9.

In preparing the dough, typically System (a)(i), System (a)(ii), System (b), System (c) and System (d) are mixed together with remaining ingredients and water to form a straight dough.

In pre-dough systems (such as sponge & dough, sour dough, liquid brew) the dough will be prepared normally by use of a two and/or more step mixing procedure. Addition of System (a)(i), System (a)(ii), System (b), System (c) and System (d) will/can be split into two and/or more parts related to the used procedure.

The Systems (a) to (d) may be prepared according to standard procedure. Each respective System may be prepared for admixing with the other Systems. Alternatively, one or more of the Systems may be formed *in situ* in the dough. For example, System (d) may be formed by sequential addition of two or more components to already mixed Systems (a) to (c).

The present invention also provides a process of making a dough as defined above comprising admixing System (a)(i) as defined above with System (a)(ii) as defined above with System (b) as defined above, optionally with System (c) as defined above and/or optionally with System (d) as defined above to form said dough.

The present invention also provides a process comprising pre-forming System (a)(i) as defined above and/or System (a)(ii) as defined above and/or System (b) as defined above and/or System (c) as defined above and/or System (d) as defined above.

The gluten strengthener of System (c), if present in the final dough, can come from all or part of a discrete added System (c) and/or it can come from all or part of a gluten strengthener that is all of, or is one of the components of, an added System (d).

In some preferred aspects, added System (d) does not comprise a gluten strengthener.

The present invention also provides a kit for forming the dough of the present invention, wherein said kit comprises a discrete System (a)(i) as defined above and/or a discrete System (a)(ii) as defined above and/or a discrete System (b) as defined above and/or a discrete System (c) as defined above and/or a discrete System (d) as defined above.

The process may also include baking said dough.

The present invention also provides a bakery product or a baked product made from the dough according to the invention or from the product of the process defined above.

Preferably the baked product is bread.

### Second Aspect

According to a second aspect of the present invention there is provided a dough comprising:
System (a);
System (b);
optional System (c); and
System (d);
wherein System (a) comprises:
   (i) rye flour and
   (ii) gluten;
wherein System (b) comprises at least a leavening agent;
wherein if System (a)(ii) comprises from 5% (bakers' %) to 9% (bakers' %) by weight of the cereal flour of System (a)(i) of exogeneous gluten then the dough additionally comprises System (c), wherein System (c) comprises at least one gluten strengthener; and wherein if System (a) comprises more than 9% (bakers' %) by weight of the cereal flour of System (a)(i) of exogeneous gluten then the dough optionally comprises System (c), wherein System (c) comprises at least one gluten strengthener; and
wherein System (d) comprises an encapsulated acidifier.

In this aspect, preferably the rye flour is present in a high percentage.

Preferably, System (a)(i) comprises at least 50% (bakers' %) rye flour.

Preferably, System (a)(i) comprises at least 55% (bakers' %) rye flour.

Preferably, System (a)(i) comprises at least 60% (bakers' %) rye flour.

Preferably, System (a)(i) comprises at least 65% (bakers' %) rye flour.

Preferably, System (a)(i) comprises at least 70% (bakers' %) rye flour.

Preferably, System (a)(i) comprises at least 75% (bakers' %) rye flour.

Preferably, System (a)(i) comprises at least 80% (bakers' %) rye flour.

Preferably, System (a)(i) comprises at least 82% (bakers' %) rye flour.

Preferably, System (a)(i) comprises at least 84% (bakers' %) rye flour.

Preferably, System (a)(i) comprises at least 86% (bakers' %) rye flour.

Preferably, System (a)(i) comprises at least 88% (bakers' %) rye flour.

Preferably, System (a)(i) comprises at least 90% (bakers' %) rye flour.

Preferably, System (a)(i) comprises at least 92% (bakers' %) rye flour.

Preferably, System (a)(i) comprises at least 94% (bakers' %) rye flour.

Preferably, System (a)(i) comprises at least 96% (bakers' %) rye flour.

Preferably, System (a)(i) comprises at least 98% (bakers' %) rye flour.

Preferably, System (a)(i) comprises 100% (bakers' %) rye flour.

Preferably, System (a)(ii) comprises at least 6% (bakers' %) by weight of the cereal flour of System (a)(i) of gluten.

Preferably, System (a)(ii) comprises at least 8% (bakers' %) by weight of the cereal flour of System (a)(i) of gluten.

Preferably, System (a)(ii) comprises at least 10% (bakers' %) by weight of the cereal flour of System (a)(i) of gluten.

Preferably the dough is at a pH from about pH 5 to about pH 7.5.

Preferably the dough does not contain an acidifier or a dough available acidifier.

Preferably the dough comprises:
said System (a);
said System (b);
said System (c); and
said System (d).

Preferably, System (a) is as defined earlier.

Preferably, System (b) is as defined earlier.

Preferably, System (c) is as defined earlier.

Preferably, System (d) is as defined earlier.

In preparing the dough, typically System (a)(i), System (a)(ii), System (b), System (c) and System (d) are mixed together with remaining ingredients and water to form a straight dough.

In pre-dough systems (such as sponge & dough, sour dough, liquid brew) the dough will be prepared normally by use of a two and/or more step mixing procedure. Addition of System (a)(i), System (a)(ii), System (b), System (c) and System (d) will/can be split into two and/or more parts related to the used procedure.

The Systems (a) to (d) may be prepared according to standard procedure. Each respective System may be prepared for admixing with the other Systems. Alternatively, one or more of the Systems may be formed *in situ* in the dough. For example, System (d) may be formed by sequential addition of two or more components to already mixed Systems (a) to (c).

The present invention also provides a process of making a dough as defined above comprising admixing System (a)(i) with System (a)(ii) as defined above with System (b) as defined above, optionally with System (c) as defined above and/or optionally with System (d) as defined above to form said dough.

The present invention also provides a process comprising pre-forming System (a)(i) as defined above and/or System (a)(ii) as defined above and/or System (b) as defined above and/or System (c) as defined above and/or System (d) as defined above.

The present invention also provides a kit for forming the dough of the present invention, wherein said kit comprises a discrete System (a)(i) as defined above and/or a discrete System (a)(ii) as defined above and/or a discrete System (b) as defined above and/or a discrete System (c) as defined above and/or a discrete System (d) as defined above.

The process may comprise baking said dough.

The present invention also provides a bakery product or a baked product made from the dough according to the invention or from the product defined above.

Preferably the baked product is bread.

### Third Aspect

According to a third aspect there is provided the use of an emulsifier in the preparation of a dough comprising rye flour.

In this aspect, preferably the rye flour is present in a high percentage.

Preferably the rye flour is present in an amount of at least 50% (bakers' %).

Preferably the rye flour is present in an amount of at least 55% (bakers' %).

Preferably the rye flour is present in an amount of at least 60% (bakers' %).

Preferably the rye flour is present in an amount of at least 65% (bakers' %).

Preferably the rye flour is present in an amount of at least 70% (bakers' %).

Preferably the rye flour is present in an amount of at least 75% (bakers' %).

Preferably the rye flour is present in an amount of at least 80% (bakers' %).

Preferably the rye flour is present in an amount of at least 85% (bakers' %).

Preferably the rye flour is present in an amount of at least 90% (bakers' %).

Preferably the dough is at a pH from about pH 5 to about pH 7.5.

Preferably the dough does not contain an acidifier or a dough available acidifier.

Preferably the dough comprises:
said System (a) as defined above;
said System (b) as defined above;
optionally said System (c) as defined above; and
optionally said System (d) as defined above.

Preferably the dough comprises:
said System (a) as defined above;
said System (b) as defined above;
said System (c) as defined above; and
optionally said System (d) as defined above.

Preferably the dough comprises:
said System (a) as defined above;
said System (b) as defined above;
optionally said System (c) as defined above; and
said System (d) as defined above.

Preferably the dough comprises:
said System (a) as defined above;
said System (b) as defined above;
said System (c) as defined above; and
said System (d) as defined above.

Other features and aspects of the present invention will now be described.

According to another aspect there is provided a bread made from flour, an emulsifier and/or an hydrocolloid, wherein a high percentage of the flour is rye flour.

According to another preferred aspect there is provided a bread made from flour, an emulsifier and/or an hydrocolloid, wherein a high percentage of the flour is rye flour, wherein the bread is toast or pan bread.

In the present invention, a high percentage of a flour means at least 50% (bakers' %), or at least 55% (bakers' %), or at least 60% (bakers' %), or at least 70% (bakers' %), or at least 75% (bakers' %), or at least 80% (bakers' %), or at least 85% (bakers' %), or at least 87% (bakers' %), or at least 90% (bakers' %), or at least 93% (bakers' %), or at least 95% (bakers' %), or at least 98% (bakers' %) w/w flour, or 100% (bakers' %) w/w flour based on the total weight of the flour in the composition. Preferable values are at least 60% (bakers' %) w/w rye flour based on the total weight of the flour in the composition. More preferable values are at least 70% (bakers' %) w/w rye flour based on the total weight of the flour in the composition. More preferable values are at least 80% (bakers' %) w/w rye flour based on the total weight of the flour in the composition. More preferable values are at least 90% (bakers' %) w/w rye flour based on the total weight of the flour in the composition. Most preferable values are 100% (bakers' %) w/w rye flour based on the total weight of the flour in the composition.

According to another aspect there is provided a bread made from flour, an emulsifier and/or an hydrocolloid, wherein about 60% (bakers' %) or more of the flour is rye flour.

According to another aspect there is provided a bread made from flour, an emulsifier and/or an hydrocolloid, wherein about 60% (bakers' %) or more of the flour is rye, wherein the bread is toasted.

According to another aspect there is provided a bread made from flour, an emulsifier and/or an hydrocolloid, wherein about 70% (bakers' %) or more of the flour is rye flour.

According to another aspect there is provided a bread made from flour, an emulsifier and/or an hydrocolloid, wherein about 70% (bakers' %) or more of the flour is rye, wherein the bread is toast or pan bread.

According to another aspect there is provided a bread made from flour, an emulsifier and/or an hydrocolloid, wherein about 80% (bakers' %) or more of the flour is rye flour, preferably wherein about 90% (bakers' %) or more of the flour is rye flour, preferably wherein about 100% (bakers' %) of the flour is rye flour.

According to another aspect there is provided a bread made from flour, an emulsifier and/or an hydrocolloid, wherein about 80% (bakers' %) or more of the flour is rye, wherein the bread is toasted, preferably wherein about 90% (bakers' %) or more of the flour is rye flour, preferably wherein about 100% (bakers' %) of the flour is rye flour.

For the highly preferred dough compositions, the dough comprises a high percentage of flour of the rye cereal grain, gluten, an emulsifier and/or an hydrocolloid and/or at least one enzyme.

For some embodiments, the composition comprising or made from flour, an emulsifier and/or an hydrocolloid, wherein a high percentage of the flour is the flour of rye cereal grain, may contain gluten.

The compositions of the present invention have favourable characteristics.

Other cereal grains that may be used in conjunction with the rye cereal grain include the grain of cereals of wheat (inc. wheat with a low falling number), barley, oats, and maize.

Preferred aspects of the present invention are presented in the claims and are described below.

For ease of reference, the preferred compositions of the present invention - i.e. compositions comprising high levels of rye - are referred to as "rye compositions". The rye composition may be the rye flour composition of the present invention (i.e. a flour composition containing a high percentage of rye flour) and/or the bakery product of the present invention (i.e. the bakery product containing a high percentage of rye flour); and/or the baked product of the present invention (i.e. the baked product containing a high percentage of rye flour).

In one aspect, the present invention provides a rye composition comprising flour, an emulsifier and/or an hydrocolloid, wherein a high percentage of the flour is rye flour. A typical high percentage of rye flour is a flour that is made up of at least 60% rye flour. The rye composition may be a rye flour composition and/or a bakery product and/or a baked product. In the latter instance, the flour would have been baked.

In another aspect, the present invention provides a process of preparing a rye composition comprising admixing flour with an emulsifier and/or an hydrocolloid and optionally also at least one enzyme, wherein a high percentage of the flour is rye flour. A typical high percentage of rye flour is a flour that is made up of at least 60% (bakers' %) rye flour. The rye composition may be a rye flour composition and/or a bakery product and/or a baked product.

In another aspect, the present invention provides the use of a rye composition comprising flour and an emulsifier and/or an hydrocolloid and optionally also at least one enzyme to prepare a baked product, wherein a high percentage of the flour is rye flour. A typical high percentage of rye flour is a flour that is made up of at least 60% (bakers' %) rye flour. The rye composition may be a rye flour composition and/or a bakery product.

In another aspect, the present invention provides the use of an emulsifier and/or an hydrocolloid and optionally also at least one enzyme in the manufacture of a rye composition comprising flour, wherein a high percentage of the flour is rye flour. A typical high percentage of rye flour is a flour that is made up of at least 60% (bakers' %) rye flour. The rye composition may be a rye flour composition and/or a bakery product and/or a baked product. In the latter instance, the flour would have been baked.

Preferably, a high percentage of a rye flour means at least 55% (bakers' %), or at least 60% (bakers' %), or at least 70% (bakers' %), or at least 75% (bakers' %), or at least 80% (bakers' %), or at least 85% (bakers' %), or at least 87% (bakers' %), or at least 90% (bakers' %), or at least 93% (bakers' %), or at least 95% (bakers' %), or at least 98% (bakers' %) w/w flour based on the total weight of the flour in the composition. Preferable values are at least 60% (bakers' %) w/w flour based on the total weight of the flour in the composition. More preferable values are at least 70% (bakers' %) w/w flour based on the total weight of the flour in the composition. More preferable values are at least 80% (bakers' %) w/w flour based on the total weight of the flour in the composition. More preferable values are at least 90% (bakers' %) w/w flour based on the total weight of the flour in the composition.

In another aspect the present invention provides a process for producing a rye flour bakery product comprising admixing one or more components comprising rye flour; and at least the following
(a) an emulsifier; and
(b) a hydrocolloid
wherein the rye flour constitutes a high percentage of the flour in the bakery product.

Preferably the components are admixed with a liquid such as water.

In another aspect the present invention provides a process for producing a rye flour baked product comprising baking a rye flour bakery product according to the present invention

In another aspect the present invention provides a rye flour bakery product prepared by admixing one or more components comprising rye flour; and at least the following
(a) an emulsifier; and
(b) a hydrocolloid
wherein the rye flour constitutes a high percentage of the flour in the bakery product.

In another aspect the present invention provides for use of an emulsifier and/or an hydrocolloid to produce a rye flour bakery product or rye flour baked product comprising a high percentage of rye flour, such as at least 60% (bakers' %), or at least 70% (bakers' %), at least 80% (bakers' %), at least 85% (bakers' %), at least 90% (bakers' %), at least 95% (bakers' %) or 100% (bakers' %), which has improved rheological properties and/or increased specific volume and/or TPA values similar to those of wheat flour bakery products and wheat flour baked products. The rye flour bakery product may have improved rheological properties. The rye flour bakery product may have increased specific volume relative to a rye flour bakery product produced using a rye flour composition that does not comprise an emulsifier and/or hydrocolloid. The rye flour bakery product may have TPA values similar to those of wheat flour bakery products. The rye flour baked product may have increased specific volume relative to a rye flour baked product produced using a rye flour composition that does not comprise an emulsifier and/or hydrocolloid. The rye flour baked product may have TPA values similar to those of wheat flour baked products.

The processes of the present invention describe how to produce bakery products containing a high percentage of rye flour. Such bakery products can be used to produce a rye flour baked product that displays characteristics similar to those obtained using a standard wheat flour, or a mix of rye flour and wheat flour but wherein the rye content is less than 50% (bakers' %). For example, using rye flour bakery products according to the present invention makes it possible to obtain loaves with improved characteristics similar to those produced using standard wheat flour bakery products.

In another aspect the present invention provides a rye flour baked product prepared by baking a rye flour bakery product of the present invention.

In another aspect the present invention provides for use of a rye flour composition according to the present invention in the preparation of a rye flour bakery product.

In another aspect the present invention provides for use of a rye flour composition according to the present invention in the preparation of a rye flour baked product.

In another aspect the present invention provides a bakery product or a baked product comprising a high percentage of rye flour, such as at least 60% (bakers' %), or at least 70% (bakers' %), preferably at least 80% (bakers' %), at least 85% (bakers' %), at least 90% (bakers' %), at least 95% (bakers' %) or 100% (bakers' %), an emulsifier and/or an hydrocolloid wherein the bakery product or baked product has improved rheological properties and/or increased specific volume, relative to a respective bakery product or baked product not comprising an emulsifier and/or an hydrocolloid, and/or TPA values similar to those of wheat flour bakery products or wheat flour baked products, respectively.

In another aspect the baked product or bakery product is a rye flour containing bread.

In another aspect the baked product or bakery product is a rye flour containing processed bread.

In another aspect the baked product or bakery product is a rye flour containing toast bread or pad bread.

In another aspect the baked product or bakery product is a rye flour containing roll.

In another aspect the baked product or bakery product is a rye flour containing cake.

In another aspect the baked product or bakery product is a rye flour containing extruded product.

In another aspect the present invention provides a baking additive comprising an emulsifier and/or an hydrocolloid, wherein the addition of the emulsifier and/or an hydrocolloid to a flour composition allow for the production of bakery products and baked products with increased specific volume, relative to those produced without an emulsifier and/or hydrocolloid, and TPA values similar to those of wheat flour bakery products or wheat flour baked products respectively from cereal grains or flour which have high endo-amylase activity.

Thus in another aspect the present invention provides a baking additive comprising an emulsifier and/or an hydrocolloid, wherein the addition of the emulsifier and/or an hydrocolloid to a flour composition allow for the production of bakery products or baked products with improved rheological properties from cereal grains or flour wherein the cereal is rye.

The rye compositions of the present invention have a number of favourable characteristics.

For example, rye flour bakery products of the present invention and/or rye flour baked products of the present invention have improved rheological properties and/or increased specific volume and/or TPA values similar to those of wheat flour bakery products or wheat flour baked products respectively.

In one embodiment, the present invention provides a rye flour bakery product and/or a rye flour baked product that has a TPA value of about 20 to 30 HPa (such as 25 HPa) up to 1 day after production.

The rye composition (such as the flour bakery product) may have improved rheological properties. The rye composition (such as the flour bakery product) may yield an increased specific volume relative to a rye flour bakery product produced using a rye flour composition that does not comprise an emulsifier and/or hydrocolloid. The rye flour bakery product may have TPA values similar to those of wheat flour bakery products.

The rye composition (such as the flour baked product) may have an increased specific volume relative to a rye flour baked product produced using a rye flour composition that does not comprise an emulsifier and/or hydrocolloid. The rye flour baked product may have TPA values similar to those of wheat flour baked products.

The expression "rheological properties" as used herein refers particularly to the effects of dough conditioners on dough strength and stability as the most important characteristics of flour doughs. According to American Association of Cereal Chemists (AACC) Method 36-01A the term "stability" can be defined as "the range of dough time over which a positive response is obtained and that property of a rounded dough by which it resists flattening under its own weight over a course of time". According to the same method, the term "response" is defined as "the reaction of dough to a known and specific stimulus, substance or set of conditions, usually determined by baking it in comparison with a control". Typically, the control is one which is identical with the test dough, but which does not comprise an emulsifier and a hydrocolloid and dough strengthening enzymes.

Thus, the term "rheological properties" relates to the above physical and chemical phenomena that in combination will determine the performance of flour doughs and thereby also the quality of the resulting baked products.

By "improving the rheological properties" or "having improved rehological properties" it is meant the rheological properties of the bakery product or baked product are improved compared with a bakery product or baked product comprising the same constituents (including the rye flour), but which does not comprise an emulsifier and/or a hydrocolloid.

In particular, it has been found that satisfactory baked products can be produced from bakery products comprising at least 50% (bakers' %) w/w rye flour based on the total weight of the flour in the dough, that have specific rheological properties. These properties may be one or more of the following: improved resistance and/or improved extensibility and/or increased viscosity.

The rheological properties of the dough can be measured by standard methods according to the International Association of Cereal Chemistry (ICC) and the American Association of Cereal Chemistry (AACC) including the amylograph method (ICC 126), the farinograph method (AACC 54-21) and the extensigraph method (AACC 54-10). Thus, in a preferred aspect, the present invention provides a rye flour composition comprising a flour, an emulsifier and/or an hydrocolloid, wherein a high percentage of the flour is rye flour (such as at least 60% (bakers' %) or at least 70% (bakers' %)) and wherein rye flour bakery products and rye flour baked products produced using the composition have improved rheological properties and/or increased specific volume and/or TPA values similar to those of wheat flour bakery products and wheat flour baked products; wherein the improved rheological properties are determinable by the amylograph method (ICC 126) and/or the farinograph method (AACC 54-21) and/or the extensigraph method (AACC 54-10).

Accordingly, the rye flour bakery product may have improved rheological properties wherein the improved rheological properties are determinable by the amylograph method (ICC 126) and/or the farinograph method (AACC 54-21) and/or the extensiograph method (AACC 54-10). The rye flour bakery product may have increased specific volume relative to a rye flour bakery product produced using a rye flour composition that does not comprise an emulsifier and/or hydrocolloid and/or an enzyme.

The rye flour baked product may have increased specific volume relative to a rye flour baked product produced using a rye flour composition that does not comprise an emulsifier and/or hydrocolloid.

The present invention may also result in one or more of the following other benefits: an improvement in the textural characteristics; an improvement in taste; an improvement in nutrition, an improvement in fibre content, an increase in specific volume. The improvements in textural characteristics may be measured by measuring firmness and stress values - such as by way of example measuring textural profile analysis (TPA) which assesses hardness, fracturability, springiness, chewiness, gumminess and resilience.

The rye flour bakery product may have TPA values similar to those of wheat flour bakery products.

The rye flour baked product may have TPA values similar to those of wheat flour baked products.

It has surprisingly been found that the composition of the present invention provides rye flour bakery products and rye flour baked products with substantially similar characteristics to wheat bakery products and wheat flour baked products (in particular texture and taste). We believe that for embodiments that comprise system (c) (preferably being an emulsifier and/or hydrocolloid) the benefits are achieved by protecting the starch in the rye flour from being hydrolysed by the naturally present endo-amylases and/or improving the gluten network. The protection of the starch granules results in the formation of a better the starch network and higher viscosity rye flour bakery products, which trap more air and result in increased volume and more stable cooled rye flour baked products.

By preventing the breakdown of the starch in rye flour, the present invention allows for the use of yeast in the preparation of rye flour bakery products and rye flour baked products and removes the need for the addition of wheat flour to rye flour compositions. The pH is also near to neutral and so allows for the improved use of yeast.

The substitution of rye flour for wheat flour provides for numerous health benefits as a result of the lower GI value of rye and the increased fibre content of the flour compositions. An example of the benefits of diets rich in rye-based foods is given in McIntosh et al. (Am J Clin Nutr (2003) 77:967-74) whilst a possible mechanism for these benefits is given in Juntunen et al. (Am J Clin Nutr (2003) 78:957-64).

Preferably System (c) comprises an emulsifier and/or a hydrocolloid.

The emulsifier of the present invention may be one or more emulsifiers.

The emulsifier of the present invention may be selected from distilled monoglycerides; mono- and diglycerides; esters of mono- and diglycerides; polyglycerol esters of fatty acids; polyglycerol polyrincinoleate; propylene glycerol esters of fatty acids; sorbitan monostearates; sorbitan tristearates; sodium stearoyl lactylates; calcium stearoyl lactylates; lecithins; diacetyl tartric acid esters of mono- and diglycerides; SMG; EMG; polysorbate; CITRIM; ACETEM.

Preferably the emulsifier is selected from mono- or diglycerides, diacetyl tartaric acid esters of mono- and diglycerides of fatty acids, lecithins, SSL, CSL, SMG, EMG, polysorbate.

More preferably the emulsifier is a monoglyceride such as Dimodan RHR Monoglycerides can also interact with the amylose to reduce degradation and following retro gradation.

The emulsifier is present at sufficient concentration to protect the starch granules of the rye flour from the endo-amylases from the amylases. The concentration of emulsifier may be between 0.2% (bakers' %) and 4% (bakers' %), between 0.4% (bakers' %) and 4% (bakers' %), between 0.5% (bakers' %) and 3% (bakers' %), between 0.7% (bakers' %) and 2.5% (bakers' %), between 0.8% (bakers' %) and 2.2% (bakers' %), or between 0.9% (bakers' %) and 2% (bakers' %). Preferably the concentration of emulsifier is between 0.9% (bakers' %) and 2% (bakers' %). All percentages of emulsifiers given herein are based on the weight of the total rye flour composition unless otherwise stated.

The hydrocolloid of the present invention may be one or more hydrocolloids.

The hydrocolloid of the present invention may be selected from carrageenan, starch, pectin, alginate, gelatine, locust bean gum (LBG), gellan, xanthan, CMC, guar gum, depolymerised guar, acacia gum, konjac gum, agar, tamarind, tragacanth, beta-glucan, arabinoxylan, wheat fibre, apple fibre, HPMC, karaya, curdlam, chitosan and combinations thereof. For some preferred aspects of the present invention, the hydrocolloids are one or more of alginates, xanthan, carrageenans, pectins, vegetable gums including e.g. guar gum and locust bean gum.

The hydrocolloid may be present at a concentration between 0.01 and 2.5% (bakers' %), 0.05 and 2% (bakers' %), 0.07 and 1% (bakers' %), or 0.1 and 0.7% (bakers' %). Preferably the concentration of hydrocolloid is between 0.1 and 0.7% (bakers' %). All percentages of hydrocolloids given herein are based on the weight of the total rye flour composition unless otherwise stated.

An additional benefit of adding hydrocolloids is that they create a hydrocolloid network and maintain the water in the baked product, which can contribute to softness over storage time.

The rye composition of the present invention comprises (or is made from - such as baked from) flour comprising a high percentage of rye; an emulsifier and/or a hydrocolloid. Additional components of the rye composition include one or more of: water and/or a leavening agent.

Preferably, the rye composition of the present invention comprises (or is made from - such as baked from) at least flour comprising a high percentage of rye; an emulsifier and/or a hydrocolloid; water; and a leavening agent.

The leavening agent may be yeast and/or a chemical leavening agent (such as a conventional chemical leavening agent).

It is, however, within the scope of the present invention that further optional components may be present in the rye composition. Typically, such further optional components include salt, sweetening agents such as sugars, syrups or artificial sweetening agents, lipid substances including shortening, margarine, butter or an animal or vegetable oil, glycerol, one or more typical dough additives such as starch, flavouring agents, lactic acid bacterial cultures, vitamins, minerals, enzymes and dietary fibre substances.

In another aspect, the rye flour composition further comprises yeast.

The use of yeast - instead of sourdough (leaven) - simplifies the production of rye flour bakery products and rye flour baked products and allows for the production of rye flour bakery products, rye flour baked products or extruded products which lack the sour/bitter taste usually associated with rye flour products.

In another aspect, the rye flour composition further comprises a chemical leavening agent. Preferably the leavening agent is baking powder or a functional equivalent thereof.

In another aspect, the rye flour composition further comprises ascorbic acid.

In another aspect the rye flour composition further comprises gluten (endogeneous gluten and/or exogeneous gluten). Gluten may form more than 0%, at least 1%, at least 5%, at least 10%, at least 15%, at least 20%, at least 25% or at least 30% of the total composition.

In an aspect the rye flour composition further comprises at least one enzyme. The enzyme may be selected from the group consisting of xylanases, starch degrading enzymes like exogenic amylases, oxidoreductases, lipases including phospholipases and glycolipase, and acyl transferases. Preferably at least xylanase is present. Other enzymes may also be present. More preferably the xylanase has no or substantially no endo-amylase or glucanase activity. Most preferably the xylanase is a bacterial xylanase, such as the bacterial xylanase Grindsted PowerBake 900. It is important that the used products do not contain higher levels of endo-amylase side activities. Other suitable xylanases can be readily identified from the art, see for instance Maat et al (Xylans & Xylanases,1992, 'Xylanases and their application in bakery' p349-360, ISBN 978-044894779).

Preferably the rye flour composition comprises one or more xylanolytic enzyme.

In an aspect the rye flour composition further comprises an anti-staling enzyme. Addition of anti staling enzyme can improve softness over storage time. The anti-staling enzyme may be the same as one of the enzymes mentioned above or may be an additional enzyme.

In some aspects lipases, oxidative enzymes (hexose oxidase, maltose oxidase, carbohydrate oxidase and glucose oxidase) can also improve gluten structure as well as DATEM or other standard strengthening emulsifiers and oxidising agents such as ascorbic acid, bromate, and azodicarbonamide (ADA).

The oxidative enzyme may be one or more of the following enzymes: glucose oxidase, pyranose oxidase, sulfhydryl oxidase, maltose oxidase, a carbohydrate oxidase (such as one that oxidises maltose, e.g. hexose oxidase (HOX)). For some aspects, the carbohydrate oxidase is at least HOX.

Furthermore the addition of ingredients that can increase pH (such as bicarbonate) can contribute to improved gluten network formation. The pH value in the composition and the rye flour baked product may be increased as compared to a traditional rye bread made with a sourdough. Preferably the pH of the composition is above at least one of the following pH values: 4, 4.5, 5, 5.1, 5.2, 5.3, 5.4, 5.5, and 5.6.

Sourdough (leaven) is defined for the purposes of the present application as a dough which has microorganisms (for example lactobacillus or yeast) from sourdough or sourdough starters, which are active or can be reactivated. With the addition of grain products and water, they are capable of continuous acid generation. Parts of a sourdough may be used as storage leaven for new sourdoughs. The vitality of the microorganisms is only terminated with baking or hot-extrusion. The increase in acidity of sourdough is based exclusively on fermentation. Preferably, other ingredients influencing acid contents - except sourdough bread - are not used.

### EXAMPLES

The present invention will now be described in further detail by way of examples. The Examples are split into the following parts:
**In Part A** of the Examples, reference is made to Figures 1 to 31. Details on those Figures now follow.
   Fig 1 shows the effect of acid treatment on specific volume and pH of bread crumbs. GRINSTED^{™} Pro Tex TR 100 is encapsulated citric acid (load 60%). The left hand (orange) columns show the pH and right hand (green) columns show specific volume in ccm/g. (Typically bigger breads are measured in ccm/g and smaller breads are measured in ml/g.)
   Fig. 2 shows that soluble acids such as citric acid makes dough stiff. Use of GRINSTED^{™} Pro Tex TR 100 (encapsulated acid) minimises negative effect on dough rheology.
   Fig. 3 shows the effect of treatment on bread softness. The higher the stress value the less soft the bread is.
   Fig. 4 presents examples of rye toast (91% rye, 9% gluten) produced with or without citric acid, encapsulated citric acid (GRINDSTED® ProTex TR 100) and 2% journal 1652/86. Straight dough procedure with proofing time of 55 min at 35°C.
   Fig 5 presents data for the exact rye toast procedure as described in example 2 and claim 12 (Kunze *et al.*)*.* Method A.
   Fig. 6 presents data for the recipe of Kunze at al's Claim 12, but adjusted in water addition to a realistic level. Farinograph consistency 470 BU. Method B (specific volume 2.1). Example 2.
   Fig. 7 presents rolls using the procedure and recipe from Kunze et al. (right) and the same procedure but using the Basic recipe (left). Proofing time 3 hrs at 36°C. Sample 1 (trial 2): 11,5% gluten, 2.6% Journal 1652/86 2,6% (without addition of hemicellulase and olive oil). Sample 2 (Trial 3): Kunze et al. 2% olive oil 50% wheat and hemicellulase (472 ppm Grindamyl PowerBake 900). Example 3.
   Fig 8 presents rolls using the procedure and recipe from Kunze et al. (right) and the same procedure but using the Basic recipe (left). Proofing time 55 min at 36°C.
   Fig. 9A presents the results of the laboratory trials described in example 3 with two different fermentation times of 55 min and 180 min (50 g dough/roll).
   Fig 9B presents a section of the rolls from example 3.
   Fig 10. presents results that demonstrate that the specific volume achieved from the Basic method without hemicellulase is 27,3% larger when comparing the product from Kunze et al using 2% olive oil and hemicellulase on top, after 3 hours proofing as described in claim 12. Comparing the samples without hemicellulase the Basic specific volume is 35,5% larger. Lefthand columns: 55 min. proofing time, righthand columns: 180 min. proofing time. (example 3).
   Fig 11 presents Trials 1B and 2, as described in Example 4, table 2. Dough handling (rounding/moulding) can be performed by machine using journal 1652/86 at 2,6%, without hemicellulase and olive oil, as it is less sticky than the dough produced by the method from Kunze et al using 50% wheat, 2% olive oil and hemicellulase.

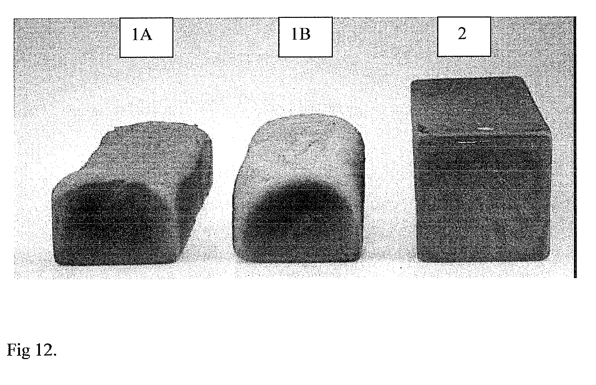

   Fig 12 presents a comparison of rye toast products produced in a standard toast procedure using claim 12 (Kunze et al.) with and without the water adjusted method - see example 2 (Method A and B). 1A: a recipe of Kunze et al. (2% olive oil, 50% wheat flour and hemicellulase) using ingredients from example 2A. 1B: a recipe of Kunze et al. (2% olive oil, 50% wheat flour and hemicellulase) using ingredients from example 2B. 1A and 1B are optimized on all process parameters using the toast procedure of the present invention. 2: the basic recipe (Journal No. 1652/86 but without hemicellulase (GRINDAMYL™ POWERBake 900) and procedure of the present invention. Specific volumes are: 1A: 2,1 ml/g, sample 1B: 2,1ml/g and sample 2: 4,2 ml/g. Basic procedure gives and increase of 100% in comparison to Kunze et al. using a standard toast procedure. Bread pH for samples 1A and 1B are 6,1 and 5,9. Sample 2 has pH of 5,7.
   Fig 13. shows the effect of gluten addition and addition of Journal No. 1652/86 containing DATEM (gluten strengthening emulsifier) on specific volume of rolls. Recipe according to the present invention with no olive oil, no acid/sour dough, 55 min proofing time at 35°C. Specific volume is based on rolls of 50 g dough. Lefthand columns: with journal no. 1652/86. Righthand columns: without journal no. 1652/86.
   Fig 14 presents the specific volume (ml/g) measurements on rye toast/pan bread produced either using the Kunze recipe and procedure (claim 12), the recipe of Kunze et al. but Basic process (including 2% olive oil, wheat flour 33% and hemicellulase, no acid) or the Basic recipe (rye, gluten, with or without emulsifier containing ingredient (Journal No. 1652/86 at 2,6%) and process. The first written number below the columns refers to the amount of gluten (and not rye) used.
   Fig 15 presents TPA measurements conducted on rye toast/pan bread slices on day 7. The first number is the % of gluten (and not rye). The first six columns (blue) are according to Basic method. The last two columns (Pink) are recipe of Kunze according to claim 12 (1 and 8) containing 2-3% olive oil and hemicellulase (wheat flour up to 100%). The lower the stress values, the softer is the bread crumb.
   Fig 16 presents a comparison of ingredients affecting specific volume in rye toast. The specific volumes are calculated as reduction compared to the recipe of Kunze but using the process of the present invention (set to zero - reference). The method according to claim 12 from Kunze adjusted to realistic water level in orange (dough consistency adjusted to 470 BU using farinograph - comparable to Basic dough consistency). The remaining trials are all conducted using Basic recipe (88,5% rye, 11,5% gluten, no olive oil) and process.
   Fig. 17 presents softness measurements conducted on day 7. The same rye toast breads as used fig. 16.
   Fig 18 presents rye toast samples. Show effect of DATEM in combination with acid (dough pH < 4,7). From left to right: 1) 0,3% DATEM + acid, 2) 0,3% DATEM, 3) 0,3% DATEM + phospholipase, 4) 0,3% DATEM + phospholipase + acid, 5) Basic reference without ingredients or acid.
   Fig 19 presents rye toast samples. Show effect of SSL in combination with acid (dough pH < 4,7). From left to right: 1) 0,3% SSL, 2) 0,3% SSL + acid, 3) Basic reference without acid (which is better than the optimal using Kunze et al. procedure).
   Fig. 20 shows the effect of phospholipase in basic recipe. To the left reference sample without ingredients to the right a rye toast produced as reference but with additional phospholipase (TS-E 1008 dosed at 400 ppm on rye flour basis). Lipase gives some improvements on volume and crumb structure and texture (see comparative data in fig. 16-17).
   Fig. 21 presents stress measurements. The higher the value the less soft the bread is and the more force is required to compress the bread slice. Light blue (no. 1, 3, 4, 5, 6, 7, 16, 19, 20) is commercial products containing above 50% rye flour. Darker blue is this invention containing rye flour above 90% (no. 21,18). Yellow is pure wheat bread (no. 8, 9, 10), while orange less than 50% is rye flour (no. 11, 12, 13, 14, 15, 17).
   Fig. 22 uses the same colours as fig. 21. Measurement on crumb resilience. How well structure is maintained after compression.
   Fig. 23 Uses the same colours as fig. 21. The figure presents the meaurement of pH . The product of the present invention with low pH was produced using encapsulated citric acid (GRINDSTED^{®} ProTex TR 100 - can be obtained from Danisco). The product of the present invention with higher pH was produced as standard wheat bread without the use of acids/acidifiers.
   Fig 24 presents a comparison of specific volume of rye and wheat based products. From left to right - 1) commercial product comprising 80% rye, 2) commercial product comprising 50% rye, 3) product according to the present invention, 4) and 5) two different commercial wheat products.
   Fig.25 presents rye rolls produced with Journal No. 1652-88 (Example 11).
   Fig 26 presents rye hamburger buns produced with Journal No. 1652/78-2 (Example 12).
   Fig . 27 presents rye brioche toast produced with Journal No. 1652/93 (Example 13).
   Fig. 28 presents rye baguette produced with Journal No. 1652/87. (Example 14).
   Fig. 29 presents rye grissini/bread stick produced using Journal No. 1652/95. (Example 15).
   Fig. 30 presents rye pizza produced using Journal No. 1652/92. (Example 17).
   Fig. 31 presents rye tortilla produced using Journal No. 1652/89. (Example 18).
   Fig 31b presents the data as Table 2 for Ex. 8 - rye toast Chorleywood process using Journal No.1652/86.
   Fig 31c presents the data as Table 3 for Ex. 9 - rye toast Straight dough process using Journal No.1652/85.
   Fig 31d presents the data as Table 4 for Ex. 10 - rye toast Sponge & dough process.
   Fig 31e presents the data as Table 5 for Ex. 16 - rye pita using Journal No. 1652/90.
**In Part B** of the Examples, reference is made to Figures 32 to 37. Details on those Figures now follow.
   Figure 32 presents the effect of TS-B 1111 and Enzyme 1 in rye flour containing systems.
   Figure 33 presents the effect of Enzyme 1 in wheat flour containing systems.
   Figure 34 presents rye bread made without sourdough using a Chorleywood procedure (example 3B).
   Figure 35 presents the effect on firmness (HPa) in rye bread straight dough 1: control, 2: TS-B 1132 and 3: control with liquid sour (example 4B).
   Figure 36 presents the effect on volume in rye bread straight dough 1: control, 2: TS-B 1132 and 3: control with liquid sour (example 4B).
   Figure 37 presents photographs of baked rye products straight dough 1: control, 2: TS-B 1132 and 3: control with liquid sour (example 4B).

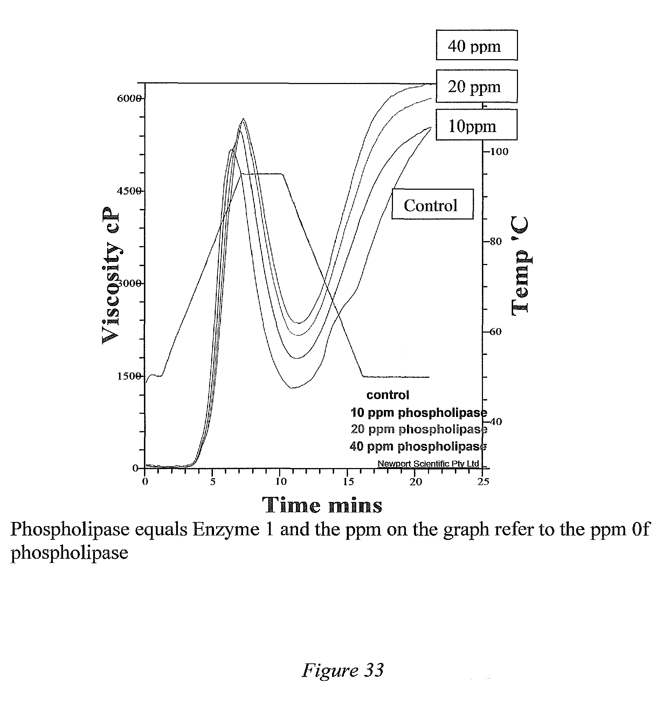

More in particular:

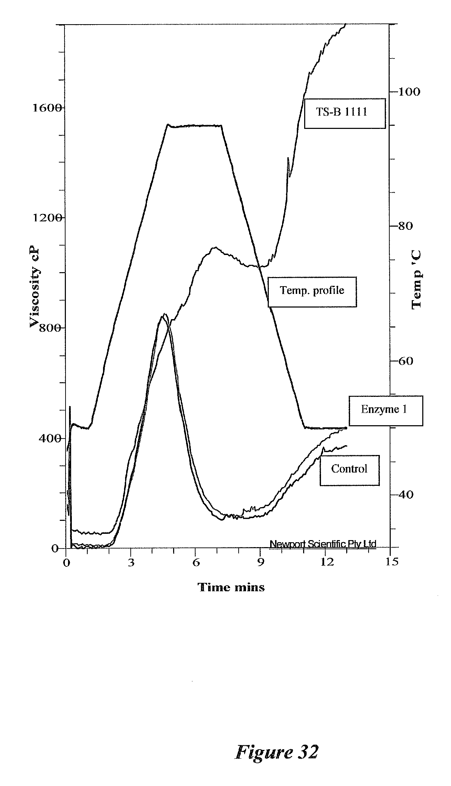

Figure 32 shows the results on of analysis using a Rapid Visco Analyser:
   Curve 1 shows the results of a first control using rye flour
   Curve 2 shows the results of a second control using rye flour treated with phospholipase
   Curve 3 shows the results for a rye flour composition according to the invention
   Curve 4 shows the temperature profile
Figure 33 shows comparative results of analysis using a Rapid Visco Analyser for wheat flour compositions. Wheat flour compositions to which various concentrations of phospholipase have been added are curves 1 to 3, curve 4 is a control with no phospholipase, and curve 5 is the temperature profile.

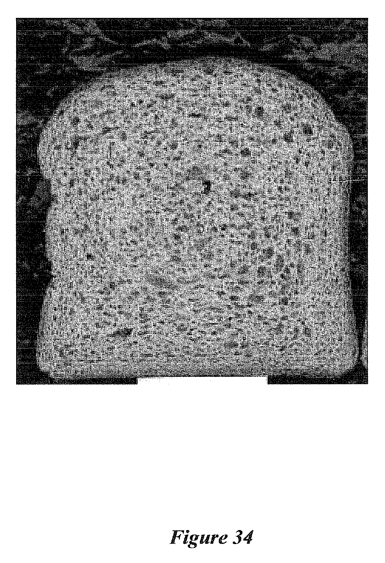

Figure 34 shows a slice of rye toast breads produced using the procedure of Example 3B.

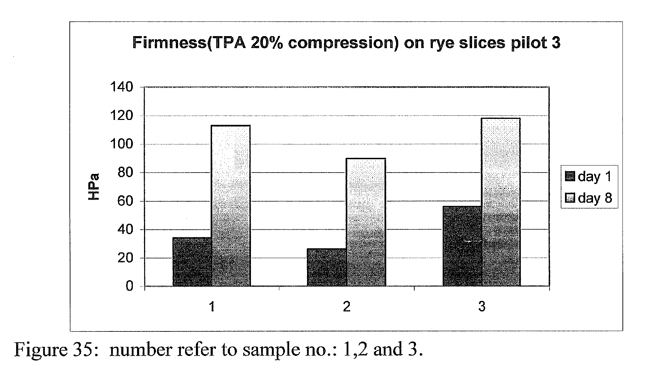

Figure 35 shows a plot of the firmness of the sample from Example 4B.

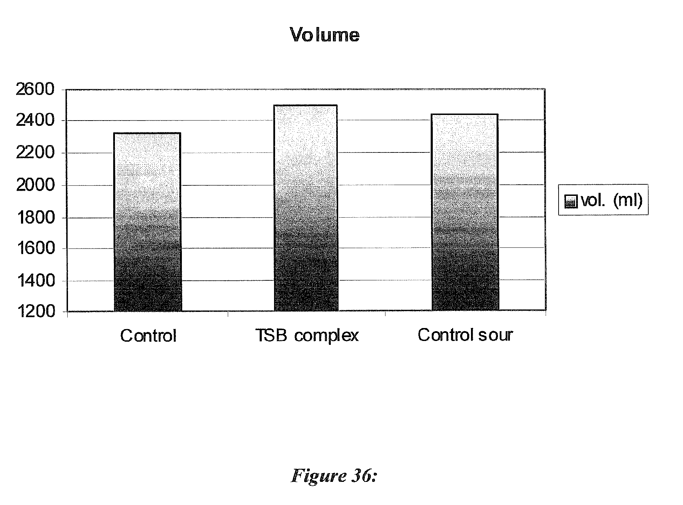

Figure 36 shows a plot of the volume of the sample from Example 4B.

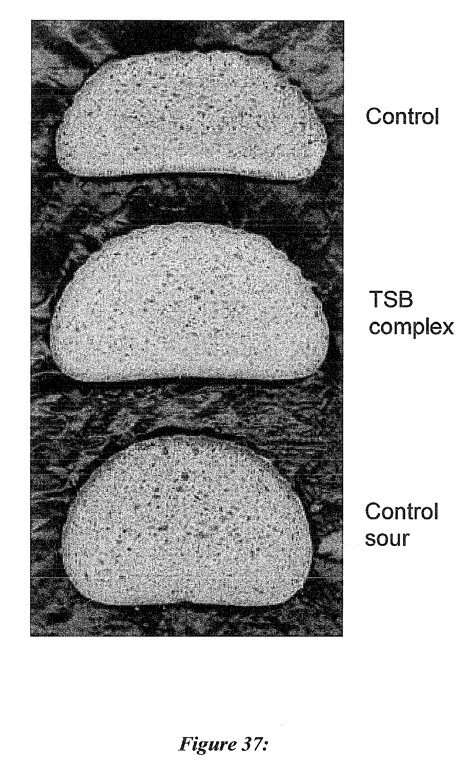

Figure 37 shows a picture of the samples from Figure 34.

### Dough Recipes

For the dough application studies (baking baked products), the amounts are present as bakers % amounts. These amounts are measured by taking the total flour added as being 100% and the remaining ingredients are quoted in relative % amounts.

The term "Basic" as used herein (e.g. with respect to Basic reference, Basic procedure, Basic process, Basic method, Basic dough, Basic trial, Basic recipe, Basic specific volume etc.) means in relation to the present invention. For example, Basic reference means a recipe falling within the scope of the present invention, Basic procedure means the procedure falling within the scope of the present invention, Basic dough means a dough falling within the scope of the present invention etc. "Basic" does not mean the essential basics of the invention.

### Materials

In the Examples, reference is made to the following ingredients:
GRINDAMYL™ MAX-LIFE U4 - supplied by Danisco A/S
Enzyme complex of fungal xylanase: *Aspergillus tubingensis* GH11 Endo-beta-(1,4)-xylanase (EC 3.2.1.8) (Accession No P55331) and bacterial amylase: Bacillus subtilis (EC 3.2.1.1).
Novamyl 1500 BG equal Enzyme 2 in the examples - supplied by Novozymes Bacterial amylase of Bacillus stearothermophilus (EC 3.2.1.133)
GRINDAMYL^{™} POWERBake 900 (sometimes referred to as GRINDAMYL™ PB900) - supplied by Danisco A/S
Bacterial xylanase of: *Bacillus subtilis* GH11 Endo-beta-(1,4)-xylanase (EC 3.2.1.8) (G13F/R122D variant of Accession No P18429)
TS-E 1367 - supplied by Danisco A/S
Lipase of *Fusarium heterosporum* triacylglycerol acylhydrolase (EC 3.1.1.3 and the CAS number is 9001-62-1)
GRINDAMYL™ S758 - supplied by Danisco A/S
Fungal glucose oxidase of Aspergillus niger (EC 1.1.3.4)
Lipopan F BG equals Enzyme 1 in the examples - supplied by Novozymes
Enzyme 1 is the lipase described in EP 869167 - Fusarium oxysporum (EC-class 3.1.1.3)
TS-E 1514 - supplied by Danisco.
Bacterial amylase of Pseudomonas saccharophila, Glucan 1,4-alpha-maltotetrahydrolase (EC. 3.2.1.60)
GRINDAMYL™ SUREBake 800 supplied by Danisco.
Hexose oxidase of Chondrus crispus (EC. 1.1.3.5)
DIMODAN^{®} RT (DIMODAN® R-T PEL/B KOSHER) - supplied by Danisco A/S
DIMODAN® R-T PEL/B KOSHER is a distilled monoglyceride made from edible, partially hydrogenated rapeseed oil with the following antioxidants added:
Alpha-tocopherol (E 307) max. 200 ppm
Ascorbyl palmitate (E 304) max. 200 ppm
The antioxidants are dissolved in:
Citric acid ester (E 472c) max. 400 ppm

| | |
|---|---|
| Total monoglyceride | min. 90% |
| Iodine value | approx. 60 |
| Free glycerol | max. 1% |
| Acid value | max. 3 |
| Dropping point | approx. 57°C |
| Form | pellets |

DIMODAN^{®} HP75/B (DIMODAN® HP 75/B KOSHER) - supplied by Danisco A/S
DIMODAN® HP 75/B KOSHER is a distilled monoglyceride made from edible, fully hydrogenated palm based oil.

| | |
|---|---|
| Total monoglyceride | min. 90% |
| Iodine value | max. 2 |
| Free glycerol | max. 1% |
| Acid value | max. 3 |
| Dropping point | approx. 69°C |
| Form | fine powder |
| Particle size | 75µ |

DIMODAN^{®} PH200 (DIMODAN® PH 200 VEG KOSHER) - supplied by Danisco A/S
DIMODAN® PH 200 VEG KOSHER is a distilled monoglyceride based on soya bean and/or rapeseed oil with the following antioxidants added:
Natural tocopherol (E 306) max. 200 ppm
Ascorbic acid (E 300) max. 200 ppm
Citric acid (E 330) max. 100 ppm.

| | |
|---|---|
| Total monoglyceride | min. 90% |
| Iodine value | approx. 15 |
| Free glycerol | max. 1% |
| Acid value | max. 3 |
| Dropping point | approx. 65°C |
| Form | fine powder |

PANODAN^{®} A2020 (PANODAN® A2020 KOSHER)- supplied by Danisco A/S
PANODAN® A2020 KOSHER is a diacetyl tartaric acid ester of monodiglycerides (DATEM) made from edible, fully hydrogenated rapeseed and/or palm based oil containing calcium carbonate as carrier in the following ratio:
80 % DATEM
20% Calcium carbonate
Specifications on the DATEM part:

| | |
|---|---|
| Saponification value | 430-460 |
| Acid value | 65-85 |
| Iodine value | max. 2 |
| Form | coarse powder |

PANODAN^{®} A2020 is sometimes referred to as DATEM.
GRINDSTED ® SSL P 55 (GRINDSTED® SSL P 55 KOSHER) - supplied by Danisco
GRINDSTED® SSL P 55 KOSHER is a sodium stearoyl lactylate made from refined, edible vegetable fatty acids.

| | |
|---|---|
| Ester value | 150-190 |
| Acid value | 60-80 |
| Iodine value | max. 2 |
| Lactic acid content | 31-34% |
| Sodium content | 3.5-5.0% |
| Dropping point | approx. 45°C |
| Form | beads |

TS-B 1111 - supplied by Danisco A/S
TS-B 1111 is an encapsulated Xanthan 200 in DIMODAN® HR. It is a powder with the following composition:

| | |
|---|---|
| DIMODAN HR | 70 % |
| GRINDSTED Xanthan 200 | 30 % |

GRINDSTED® Xanthan 200 is a food grade xanthan gum supplied by Danisco

| | |
|---|---|
| Moisture 5 - 12% | |
| PH (1% solution) | 6.0-8.0 |
| Particle size | min. 92% through 75µm (200 mesh) |
| | Min. 99.5% through 180µm (180 mesh) |
| Viscosity | 1,200 -1,600 mPa.s (24 degree C, 1% KCl, Brookfield LVT, 60 rpm, spindle3) |

DIMODAN® HR is a distilled monoglyceride made from edible, fully hydrogenated rapeseed oil supplied by Danisco.

| | |
|---|---|
| Total monoglyceride | min. 90% |
| Iodine value | max. 2 |
| Free glycerol | max. 1% |
| Acid value | max. 3 |
| Dropping point | approx. 72°C |
| Form | beads |

TS-B 1130 - supplied by Danisco A/S
Combination of
31.58% DIMODAN® PH 100
5.26% Ascorbic acid
2.63% GRINDAMYL™ POWERBake 900
3.16% TS-E 1367
1.58% Enzyme 2
52.63% PANODAN® A2020
3.16% GRINDAMYL™ SUREBake 800
DIMODAN® PH 100 (DIMODAN® PH 100 NS/B KOSHER) supplied by Danisco.
A distilled monoglyceride based on rapeseed and palm based oil with the following antioxidants added:
Alpha-tocopherol (E 307) max. 200 ppm
Ascorbyl palmitate (E 304) max. 200 ppm
The antioxidants are dissolved in:
Citric acid ester (E 472c) max. 400 ppm

| | |
|---|---|
| Total monoglyceride | min. 90% |
| Iodine value | max. 35-45 |
| Free glycerol | max. 1% |
| Acid value | max. 3 |
| Dropping point | approx. 62°C |
| Form | fine powder |

TS-B 1131 - supplied by Danisco A/S
Combination of :
32.61% DIMODAN® PH 100
5.43% Ascorbic acid
2.72% GRINDAMYL™ POWERBake 900
3.26% TS-E 1367
1.63% Enzyme 2
54.35% PANODAN® A2020
TS-B 1132 - supplied by Danisco A/S
Combination of ascorbic acid, enzyme complex, monoglyceride and hydrocolloid.
Combination of:
94,67% TS-B 1111
1.78% Enzyme 1
1,78% GRINDAMYL™ SUREBake 800
1.78% Ascorbic acid
GRINDSTED® ProTex TR 100 supplied by Danisco
GRINDSTED® Pro Tex TR 100 is an encapsulated citric acid 200 in DIMODAN® HR.

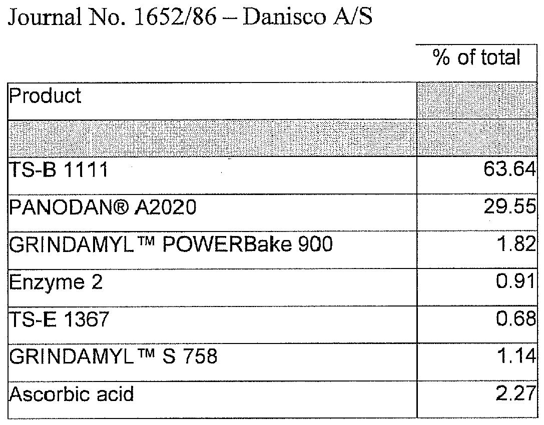

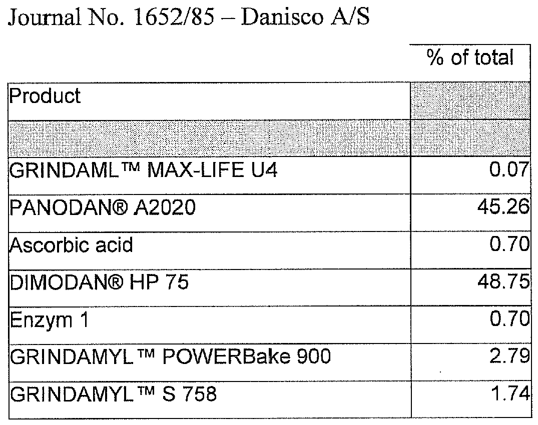

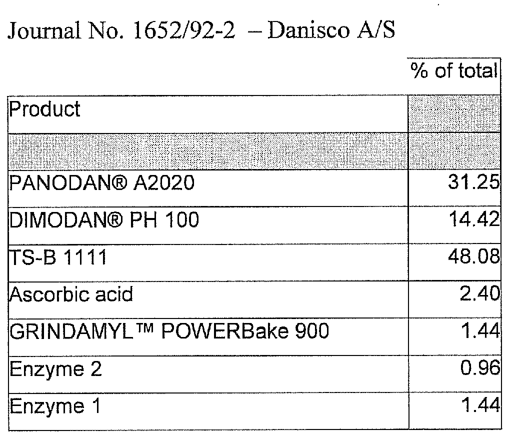

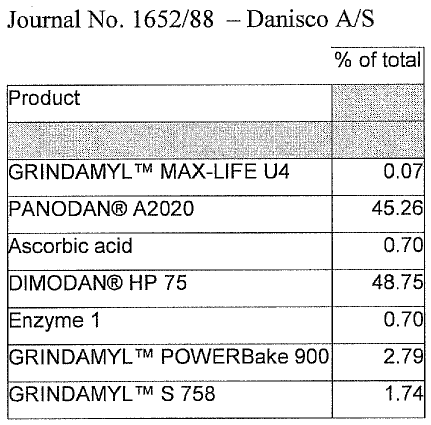

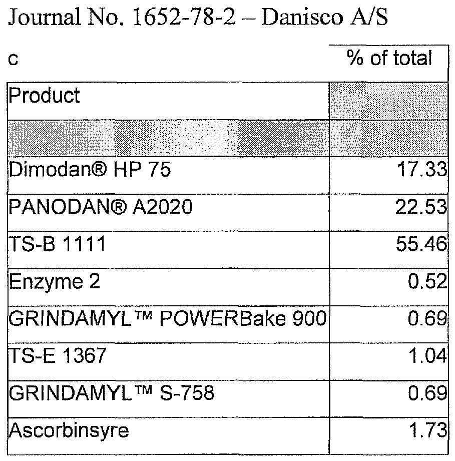

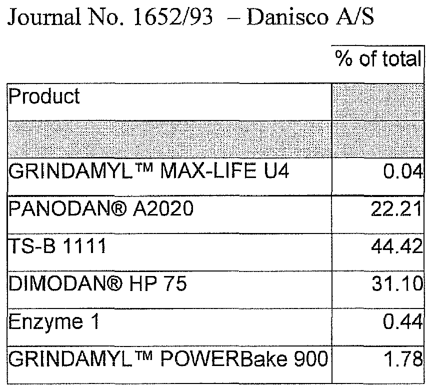

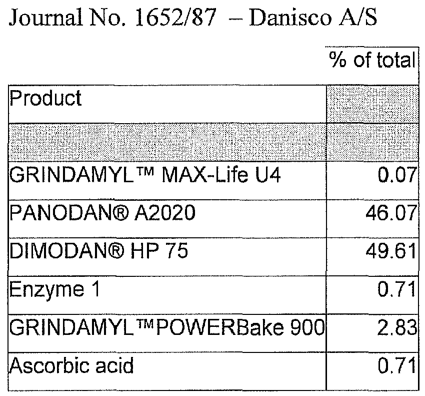

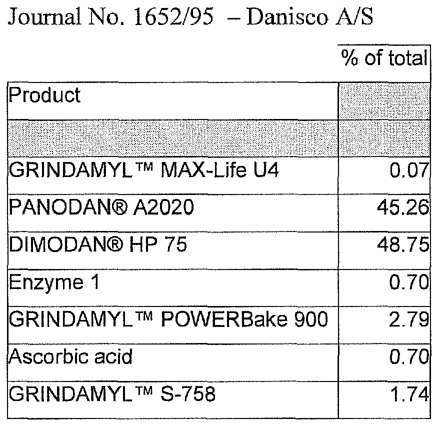

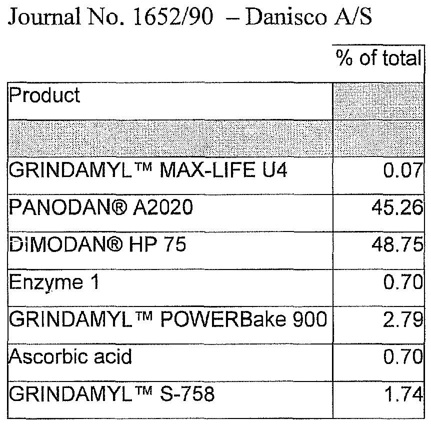

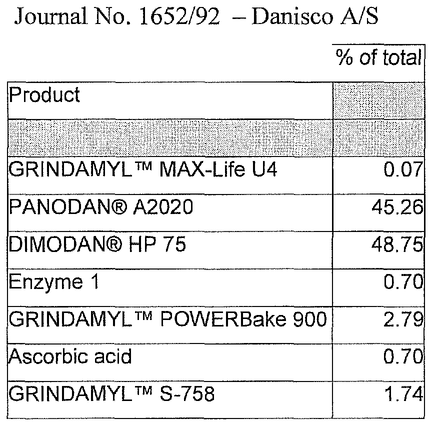

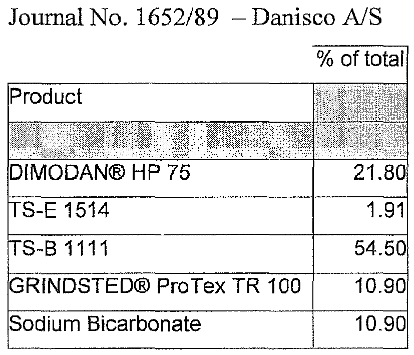

### PART A

### Introduction

In this Section reference is made to Examples 1 to 18. In these examples we show that if gluten is used in levels above 9% in System (a) then there is no need to use a gluten strengthener in System (c). We also found that if the gluten levels are between 5-9% in System (a) then it is preferred to use a gluten strengthener in System (c). In each instance, we obtained better results than those obtained by Kunze et al who used only 66% rye flour (see fig. 12, fig 13 and fig. 10 of that document)

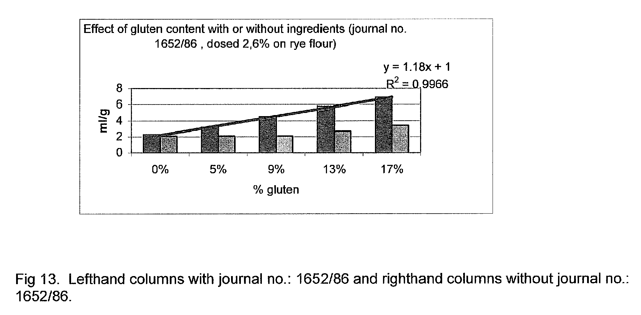

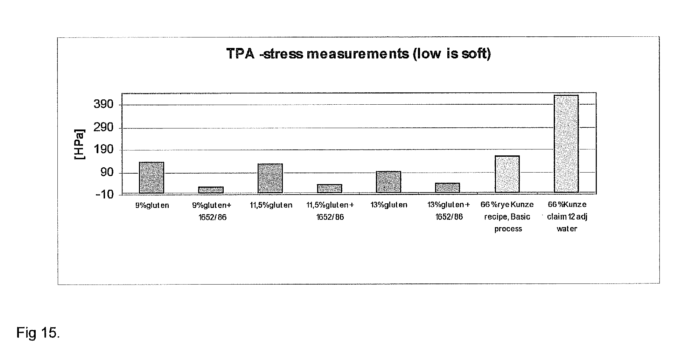

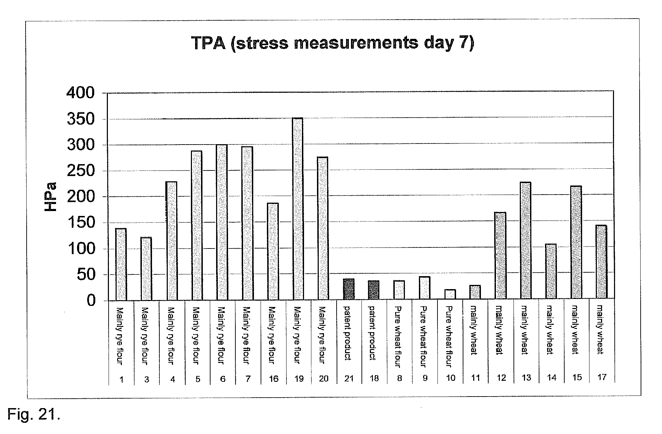

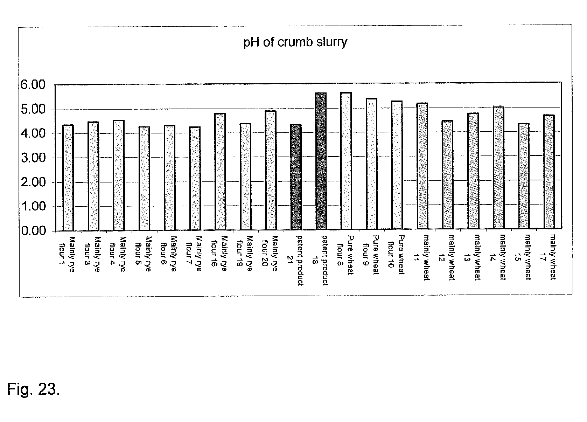

In particular:
Examples 1 and 7:
   - Demonstrate how acid affects gluten network development in a negative direction, producing rye breads of low volume and poor softness compared to products produced without the addition of acids.
   - Addition of ingredients containing emulsifiers (such as journal nr.1652/86) can improve volume and softness to a level comparable to wheat based products (example 7 fig 21-24) when added without acid or in combination with encapsulated acid. Encapsulated acids have not been used before in rye bread production.
Examples 2, 3 and 4:
   - Reproduction of rye toast described in claim 12 by Kunze et al. failed as we believe they made a mistake in their example 4. (Example 2 Method 2A in this patent).
   - Difference between the Basic recipe and Kunze et al. The Basic recipe does not need addition of shortening or oil, nor hemicellulase to obtain better results than Kunze et al. The use of gluten makes it possible to obtain high quality products in combination with ingredients such as emulsifier (e.g. Datem) even using very high levels of rye flour (above 80%).
   - Optimisation of Kunze et al procedure: The water addition in the recipe of Kunze et al, was adjusted to a standard dough consistency around 470 BU by use of farinograph.
      The resulting rye toast (proofing /maturation time of 16 hrs) was compared to a rye toast resulting from the Basic recipe given above - proofing/maturation of only 55 min. Comparison was done in example 4. Comparison was performed on specific volume and softness (TPA - stress measurements). The Basic recipe disclosed above produces significantly higher volumes and better softness than the products produced using the method disclosed by Kunze et al.
      Measurements on bread pH demonstrate that pH of products obtained using the method of Kunze et al. are between 5,9-6,2 while the pH of the bread crumbs are between 5,5-5,7 when using the Basic recipe from this invention.
Example 5 and 6:
   - Studies show that increasing gluten addition in the Basic recipe demonstrates improved volume. If no ingredients are added then the level should preferable be above 9% to obtain higher quality than Kunze et al. However by further addition of ingredients containing emulsifiers as Datem or a lipase lower amount can be used (such as above 5%) - see fig. 13-15 example 5).
   - However these effects in high rye flour containing recipes are only possible to obtain when at pH is above 5. Preferably between 5,4-6,5. If acid is added then the effect of both gluten and ingredient is eliminated (see fig. 15-19 in example 6).
   - Example 6 demonstrates the positive effect of emulsifiers (gluten strengthening) on specific volume, crumb structure and texture (including softness).
EXAMPLES 8-18
   - Cover a series of different applications using the Basic recipe: rye, gluten, emulsifier/lipase, no acid/sourdough (alternatively encapsulated citric acid).

**EXAMPLE 1. Effect of acids and encapsulated acids on rye toast production.**

### Recipe.

100 % Rye flour
10 % gluten
2,5% g salt
5 % sugar
6 % yeast compressed
79 % Water

Procedure (Tweedy mixer - high speed high shear mixer based on the Chorleywood process (CBP) principles from 1960).
Dough temperature: 26-27°C. using 11 Wh/kg.
Rest: 5 min
Scaling: 900 g/toast tin. Tin 10x9x27cm. With lid
Rest max 5 min.
Mould on Glimek: 1:4 - 2:4 - 3 :14 - 4:12. 11 in each side
Proofing: 55 min at 35°C, 85%RH. In proofing cabinet, Miwe GBA
Baking: 30 min at 210°C. in Miwe roll-in oven
Cooling: 1 hr. before gas packing in Komet S 501, with vacuum and CO2

Volume was determined using the rape seed displacement method.

Softness was determined at day 7 using a texture analyzer (TPA) stress measurement.

pH of crumbs was measured using 3 g of crumb homogenized in 15 ml of deionised water.

### Experimental set-up

1. Control
2. 0,72% citric acid
3. 1,2% GRINDSTED^{®} Pro Tex TR 100 (encapsulated citric acid)
4. 1,2% GRINDSTED^{®} Pro Tex TR 100 and 2% Journal no.: 1652/86 (emulsifier,hydrocolloid, enzyme blend according to the present invention description)
5. 2% Journal no.: 1652/86

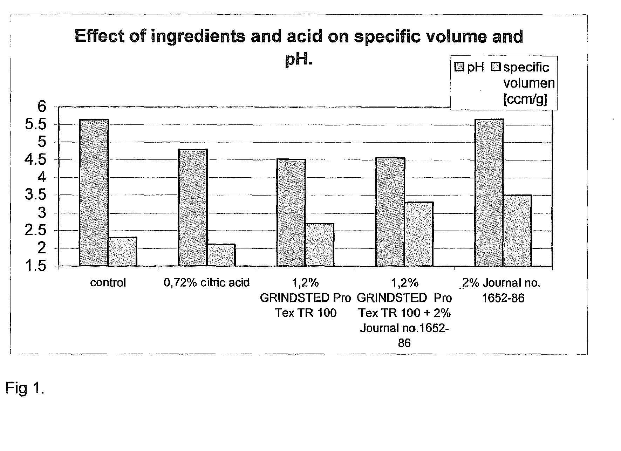

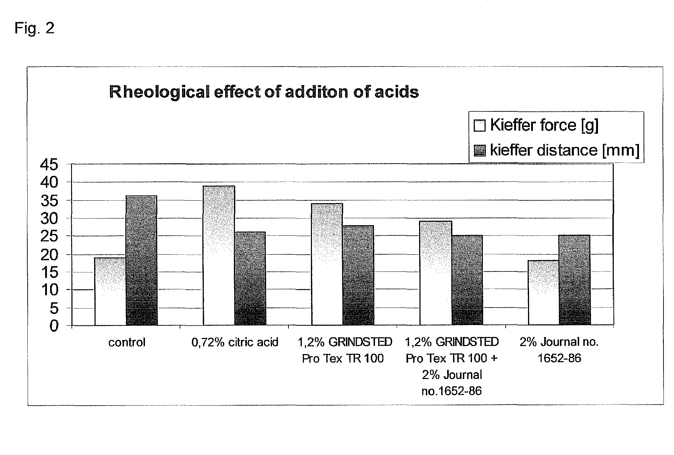

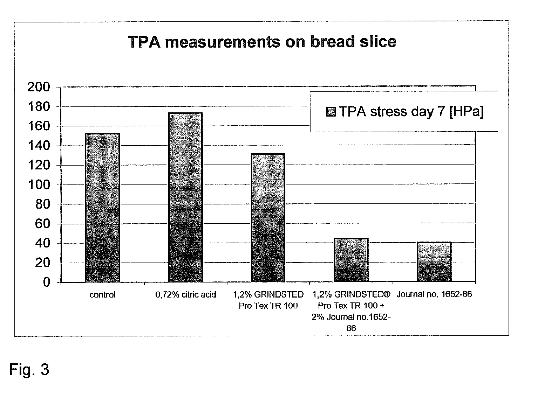

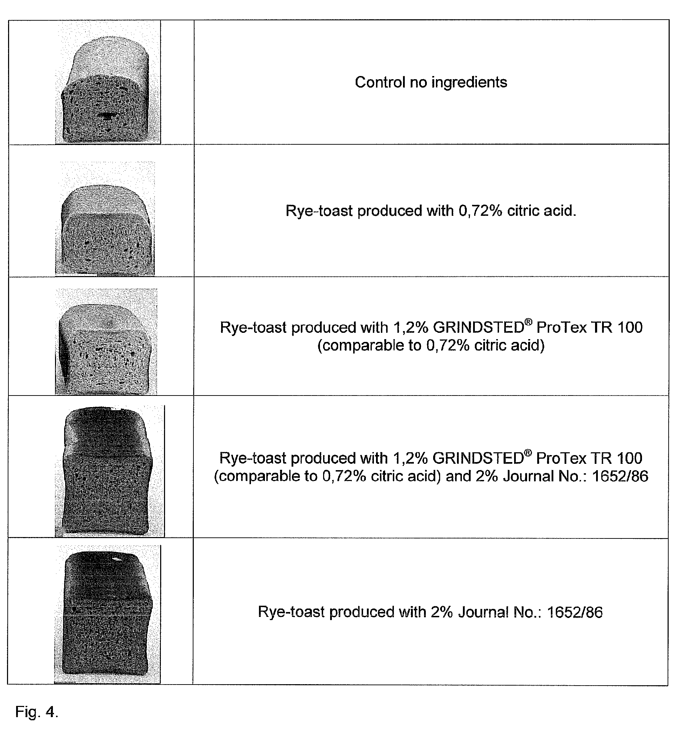

The results are shown in Figures 1, 2, 3 and 4.

Conclusion on example 1:
- The addition of soluble acids has negative effect on protein network development.
- By encapsulating the acid it is possible to avoid the negative effect of the acid on the gluten network development.
- When dough has pH over 5 (preferably above 5,4) it is possible to obtain significant volume and softness improvements by addition of ingredients improving interactions to gluten protein such as DATEM, lipase.

### EXAMPLE 2

### Comparison of rye toast bread according to the present invention to prior art from (Kunze et al. 2006.

Recipe and procedure according to Kunze *et al.*

### 2A. Method A: As described in claim 12 of Kunze et al.

### Sponge step:

1000 g rye flour type 997
5 g compressed yeast
7625 g water

### Procedure:

Mix for 5 min. Dough temperature 30°C
Leave at RT (22°C) for 15,5 hrs.

### Dough step:

1000 g rye type 997
500 g US flour (high protein)
100g olive oil
45g compressed yeast
50 g milk powder
50 g sugar
50 g salt
400 ppm Grindamyl PowerBake 900
7625 g water

### Procedure:

Mix: in spiral mixer. 2 min at low speed and 5 min at high speed.
Rest: 10 min followed by moulding.
Use 850 g dough for toast tin
Proofing: 32°C, 78%RH for 60 min.
Baking: 35 min at 220°C

### 2B. Method B: As claim 12 but with water level modified by the present inventors to try to obtain an optimised system of Kunze et al.

### Sponge step:

1000 g rye flour type 997
5 g compressed yeast
762,5 g water

### Procedure:

Mix for 5 min. Dough temperature 30°C
Leave at RT (22°C) for 15,5 hrs.

### Dough step:

1000 g rye type 997
500 g US flour (high protein)
100 g olive oil
45 g compressed yeast
50 g milk powder
50 g sugar
50 g salt
400 ppm Grindamyl PowerBake 900 (hemicellulase, xylanase according to claim)
762,5 g water

The whole of the sponge is used.

### Procedure:

Mix: in spiral mixer. 2 min at low speed and 5 min at high speed.
Rest: 10 min followed by moulding. Use 850 g dough for toast tin
Proofing: 32°C, 78%RH for 60 min.
Baking: 35 min at 220°C

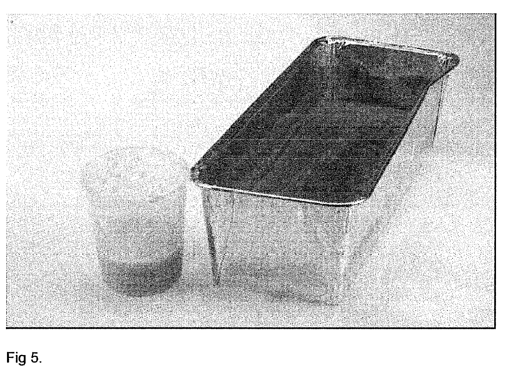

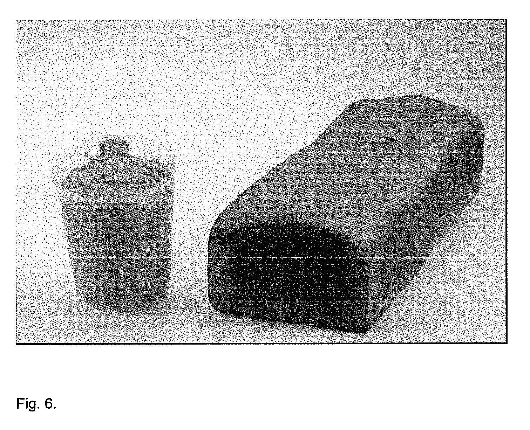

The results are shown in Figures 5 and 6.

### Example 3. Rolls laboratory method to evaluate differences between method from Kunze et al. and the present invention.

### Recipe and procedure:

| | Kunze et al (trial 1) g | Basic recipe (trial 2) g | Kunze et al (trial 3) g | Basic recipe (trial 4) g |
|---|---|---|---|---|
| Rye flour type 997 | 200 | 200 | 200 | 200 |
| wheat flour US | 100 | | 100 | |
| Yeast | 9 | 9 | 9 | 9 |
| Sugar | 10 | 10 | 10 | 10 |
| Salt | 10 | 10 | 10 | 10 |
| Gluten (75% protein) | | 20 | | 20 |
| Olive oil | 4 | | 4 | |
| water | 200 (BU 470) | 152 (BU 470) | 200 (BU 470) | 152 (BU 470) |
| Hemicellulase/xylanase (GRINDAMYL™ POWERBake 900) | | - | 472ppm, 0,095g | |
| Journal No. 1652-86 | | 2,6% but no PowerBake 900 | | 2,6% (5,2g) 0,095g of PowerBake 900 |

The units "BU" are Barbender Units - namely, a unit of the water needed in order to get the right dough consistency in this example a dough consistency of 470 BU at the Farino graph.

Dosage of single ingredients in journal 1652/86. Dosed on basis of rye flour:

| | |
|---|---|
| PANODAN^{™} A2020 : 0,767% | (Datem) |
| GRINDAMYL^{™} Maxlife U4: 17,7 ppm | (bacterial amylase) |
| TSB 1111 : 1,65% | (monoglyceride and xanthan - encapsulated) |
| Enzyme 2: 236ppm | (exo amylase, bacterial) |
| TS-E 1367: 177ppm | (lipase, glycolipase) |
| PB 900: 472 ppm | (hemicellulase/xylanase, bacterial) |
| S758: 295 ppm | (Glucose oxidase, oxidative enzyme) |
| Ascorbic acid: 590 ppm | (oxidizing agent) |

### Procedure:

1) Mix in Farinograph for 7 min at 30 °C (63rpm)
2) weigh 4 x 50 g dough
3) rest dough ball for 10 min after end mix
4) Rounding/moulding
5) Proofing 55 min or 3 hrs (L) in humidity chamber at 36°C, 85% RH.
6) Baking with steam in MIWE- roll-in at 18 min (prog. 1)

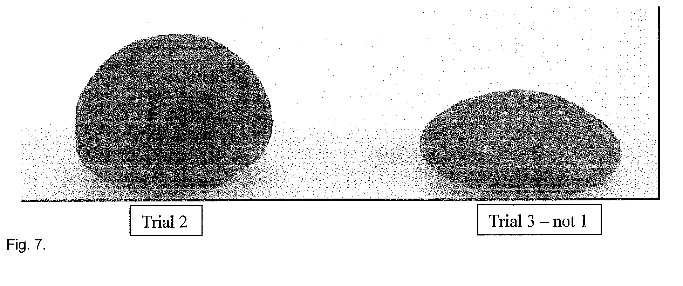

The results in Fig 7. show that the Basic recipe ( sample 1) without olive oil, acid or sour dough but containing gluten (11,5%) and 2,6% journal 1652/86 without hemicellulase comparable to the amount used by Kunze (33% flour) result in larger volume than the method described by Kunze et al. with 2% olive oil, 33% wheat flour and hemicellulase. Even under prolonged proofing (3 hrs) as described by Kunze et al.

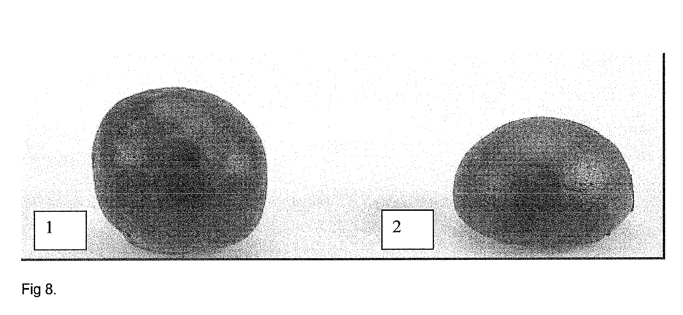

The results in Fig 8 show that also under shorter proofing times sample 1 (Basic recipe) gives higher volumes that the procedure described by Kunze et al. (sample 2). In Figure 8 rolls using the procedure and recipe from Kunze et al. (right) and the same procedure but using the Basic recipe (left) were prepared. The proofing time was 55 min at 36°C
1 11,5% gluten, Journal 1652/86 2,6% (no hemicellulase).
2 Kunze et al. 2% olive oil, 33% wheat and hemicellulase (472 ppm Grindamyl PowerBake 900, hemicellulase/xylanase)

### Studies of effect of hemicellulase addition and proofing time.

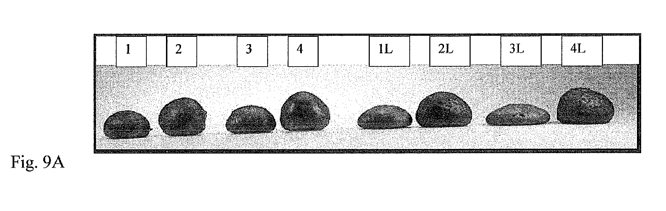

Fig. 9A shows the laboratory trials form left to right (50 g dough/roll):
1. Kunze et al (2% olive oil, 33% wheat no hemicellulase). 55 min proofing at 36°C.
2. journal 1652/86 but without hemicellulase, no olive oil, 9% gluten, 55 min proofing at 36°C
3. Kunze et al (2% olive oil, 33% wheat with hemicellulase). 55 min proofing at 36°C.
4. journal 1652/86 but with hemicellulase, no olive oil, 9% gluten, 55 min proofing at 36°C
5. Kunze et al (2% olive oil, 33% wheat no hemicellulase). 180 min proofing at 36°C. (1L)
6. journal 1652/86 but without hemicellulase, no olive oil, 9% gluten, 180 min proofing at 36°C (2L)
7. Kunze et al (2% olive oil, 33% wheat with hemicellulase). 180 min proofing at 36°C. (3L)
8. journal 1652/86 but with hemicellulase, no olive oil, 9% gluten, 180 min proofing at 36°C. (4L)

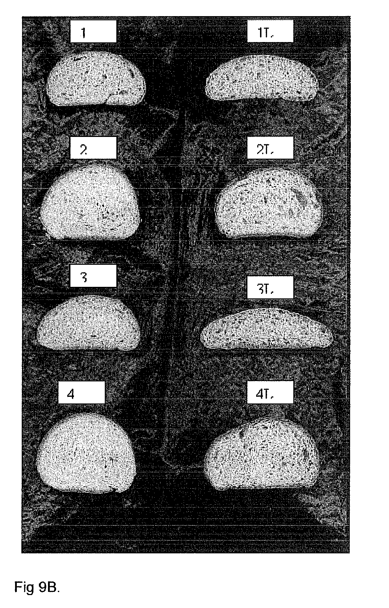

Cross sections of these results are shown in Fig 9B.

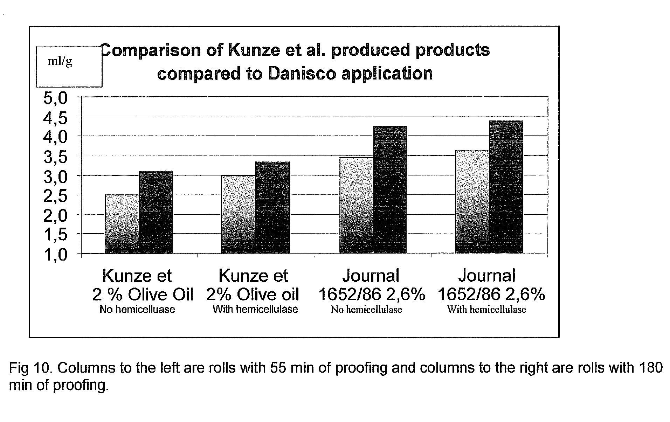

The result of specific volume measurements are given in fig 10.

The results in Fig 10 demonstrate that the volume achieved from the method of the present invention without hemicellulase is 27,3% larger when comparing the product from Kunze et al using 2% olive oil and hemicellulase on top, after 3 hours proofing as described in claim 12. Comparing the samples without hemicellulase the specific volume is 35,5% larger.

Conclusion from example 3 (fig 7-10).
- Addition of gluten is important to obtain large volumes. The higher the gluten levels give significantly higher volumes becomes. The effect is dominated by the development of a gluten network. The gluten network is improved significantly by addition of gluten strengtheners - such as journal 1652/86 containing DATEM.
- From example 1 it is demonstrated that gluten can be developed well if the dough pH levels are higher than 4,7 preferably 5,5 (that is without addition of acid/sour dough). We also demonstrate that it is possible to get significant improvements without the addition of neither shortening (olive oil) nor hemicellulase.

### EXAMPLE 4 Pilot test of rye toast covering claim 1-12 (Kunze et al) compared to the method of the present invention.

### Recipe and procedure:

Trial 1B: as described in example 2

In this example, we took the ingredients from Ex 2 method B (ingredients used by Kunse et al. with optimized water level) and then further tested those ingredients in the procedure of the present invention so as to compare the Kunze ingredients and those of the present invention.

**Table 2. IB: Recipe of Kunze et al. 2006 using basic procedure. 2. Basic procedure and recipe.**

| | Trial 1B | Trial 2 |
|---|---|---|
| rye flour | 2000 | 2000 |
| wheat flour US | 1000 | |
| Yeast | 100 | 100 |
| Sugar | 100 | 100 |
| Salt | 100 | 50 |
| Gluten | | 260 |
| Oil | 40 | |
| Water | 2000 | 1600 |
| Milk powder | | |
| GRINDAMYL™ PowerBake 900 | 0,95g | |
| Journal 1652-86 | | 2,6% - without GRINDAMYL™ PowerBake 900 |

### Basic Procedure:

Mix - 1 min. dry, 2 + 5 min. Using a spiral mixer from Diosna.
Dough temp. 27°C.
Rest: 5 min at ambient temperature (22°C)
Scaling: 750 g, toast tin. Tin dimensions 10x9x27cm. With lid
Mould on Glimek: 1:4 - 2:4 - 3 :14 - 4:12. 11 in each side
Proofing: 55 min at 35°C, 85%RH. In proofing cabinet, Miwe GBA
Baking: 30 min at 210°C. in Miwe roll-in oven
Cooling: 1 hr. before gas packing in Komet S 501, with vacuum and CO2
Volume was determined using the rape seed displacement method.
Softness was determined at day 7. using a texture analyzer (TPA).

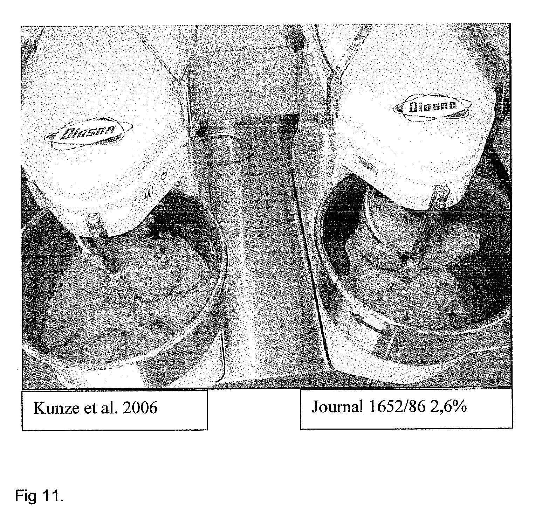

The results are shown in Figure 11 and Figure 12.

Figure 11 shows Trials 1B and 2 as described in example 4.

Dough handling (rounding/ moulding) can be performed by machine using journal 1652/86 at 2,6%, without hemicellulase and shortening/oil, as it is less sticky than the dough produced by the method from Kunze et al using 50% wheat, 2% olive oil and hemicellulase.

Fig 12 presents a comparison of rye toast products produced in a standard toast procedure using claim 12 (Kunze et al.) with and without the water adjusted method - see example 2 (Method A and B). 1A: a recipe of Kunze et al. (2% olive oil, 50% wheat flour and hemicellulase) using ingredients from example 2A. 1B: a recipe of Kunze et al. (2% olive oil, 50% wheat flour and hemicellulase) using ingredients from example 2B. 1A and 1B are optimized on all process parameters and using the toast procedure of the present invention. 2: the basic recipe (Journal No. 1652/86 but without hemicellulase (GRINDAMYL™ POWERBake 900) and procedure of the present invention. Specific volumes are: 1A: 2,1 ml/g, sample 1B: 2,1ml/g and sample 2: 4,2 ml/g. Basic procedure gives and increase of 100% in comparison to Kunze et al. using a standard toast procedure. Bread pH for samples 1A and 1B are 6,1 and 5,9. Sample 2 has pH of 5,7.

### EXAMPLE 5. Effect of gluten addition and ingredient containing strengthening emulsifiers (Datem) - comparison to (Kunze et al.

### Example 5A Rolls.

### Recipe and procedure

| | Basic (trial 4) g |
|---|---|
| Rye flour type 997 | 200 |
| Yeast | 9 |
| Sugar | 10 |
| Salt | 10 |
| Gluten (vital) | variable |
| Water | 152 (BU 470) |
| Journal 1652-86 2,6% on rye flour | 5,2 |

Type 997 (rye flour) refers to a German type system.

### Procedure:

1) Mix in Farinograph for 7 min at 30 °C (63rpm)
2) weigh 4 x 50 g dough
3) rest dough ball for 10 min after end mix
4) Rounding/moulding
5) Proofing 55 min in humidity chamber at 36°C, 85% RH.
6) Baking with steam in MIWE- roll-in at 18 min (prog. 1 )

### Results - Specific volume of rolls

The results are shown in Fig 13 which shows the effect of gluten addition and addition of 1652/86 containing Datem (gluten strengthening emulsifier) on specific volume of rolls. Recipe according to the present invention with no olive oil, no acid/sour dough, 55 min proofing time at 35°C. Specific volume is based on rolls of 50 g dough.

The results demonstrate that there is a linear correlation close to 1 between addition of gluten in combination with 2,6% journal nr.1652/86 ingredient containing Datem. There is approximately 100% increase when adding ingredient on top of gluten. If no ingredient is added then it is preferable to add more 9% gluten in order to obtain significant volume increase. Above this level it is possible to get positive correlation between gluten addition and specific volume even in the absence of ingredients containing emulsifier (gluten strengthener).

### Example 5B. Pilot test - rye toast. Effect of gluten and Journal 1652/86 in rye-toast using a straight dough procedure.

### Kunze recipe - pink columns in the attached Figures

| | Trials 7 and 8 |
|---|---|
| rye flour | 2000 |
| wheat flour US | 1000 |
| Yeast | 100 |
| Sugar | 100 |
| Salt | 100 |
| Oil | 40 |
| Water | 2000 |
| Hemicellulase ,PowerBake 900 | 0,95g |

Basic recipe - Bakers percent (dosage based on rye flour) for samples 1-6 in blue columns.
100% of rye flour (997 APB lot.: 2007-00044) - 3000 g flour
variable gluten (10-15% on rye flour)
2,5% salt
5 % sugar on flour
yeast (6% APB)mht:23-4-07
0,3% Calcium proionate.
80% water

### Basic process

Mix - Diosner: 2+6 min.
Just after mixing scale and mould 2x 900g + 2x 750g for rye toast
Proffing: 55 min. 30C.- 85%Rh.
Baking 30 min at 205°C with steam program 1(Danish Toast)
Cool 1 hour before packing.

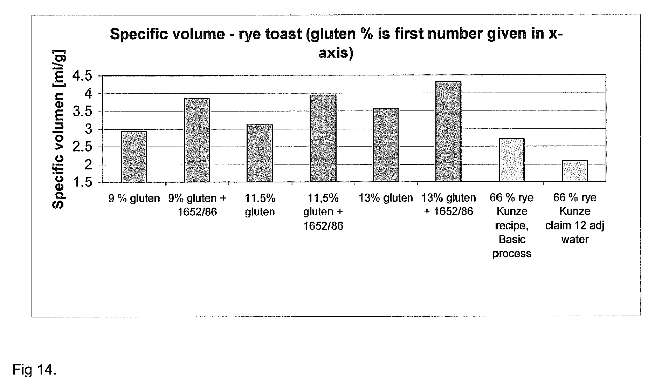

The results are presented in Figures 14 and 15.

In Fig 14: Specific volume (ml/g) measurements on rye toast produced either using the Kunze recipe and procedure (claim 12), the recipe of Kunze et al. but Basic process (including 2% olive oil, wheat flour 33% and hemicelllulase, no acid) or the Basic recipe (rye, gluten, with or without emulsifier containing ingredient (journal 1652/86 at 2,6%) and process. The first written number below the columns refers to the amount of gluten used.

Fig 14: The higher the specific volume results the larger volume is obtained. The largest volumes are achieved using Basic recipe and process containing higher gluten % (that is lower rye flour % - see blue columns), addition of ingredients containing gluten strengthening emulsifier (journal nr. 1652/86 at 2,6%) improves volumes compared to Kunze et al. even if using gluten levels comparable to 33% wheat flour addition (compare Kunze claim 12 in pink to that of the present invention 9% gluten + 1652/86 in blue).

Fig 15: TPA measurements conducted on rye toast slices on day 7. The first number is the % of gluten. Samples in blue are according to Basic method. Pink are recipe of Kunze according to claim 12 (1 and 8) containing 2-3% olive oil and hemicellulase (wheat flour up to 100%). The lower the stress values the softer the bread crumb is.

The softest bread is obtained using the Basic recipe and process with additional ingredient (journal number 1652/86 containing gluten strengthening emulsifier- Datem).

**Conclusion:** The method of the present invention without olive oil and acid/sour dough but containing gluten gives better specific volume and TPA results (softness), especially when 1652/86 containing gluten strengthening emulsifier is added. This compared to the procedure described by Kunze et al with olive oil and hemicellulase whether it is short proofing/maturation (Kunze process) or long proofing/maturation (claim 12 of Kunze). The difference is affected by the amount of gluten added and by addition of ingredient containing gluten strengthener emulsifier (here Datem).

### EXAMPLE 6. Effect of single ingredients such as emulsifiers and lipases.

The recipe is given below
Straight dough rye-toast recipe -Bakers percent (dosage based on rye flour)
100 % Rye flour (type 997)
13 % gluten, Kroner Stärke
2,5 % salt
5 % sugar
5 % yeast compressed (mht:21-05-07)
80 % Water
Emulsifier - variable
Acid - variable
Enzyme - variable
0,3 % Calcium Propionate (anti-microbial/molding)

### Procedure :

Mix -1 min. slow dry, add water and mix 2min slow + 5,5 high speed min. Using a spiral mixer from Diosna.
Dough temp. 27°C.
Rest: 5 min at ambient temperature (22°C)
Scaling: 750 g, toast tin. Tin dimensions 10x9x27cm. With lid
Mould on Glimek: 1:4 - 2:4 - 3:15 - 4:14. 11 in each side
Proofing: 55 min at 35°C, 85%RH. In proofing cabinet, Miwe GBA
Baking: 30 min at 210°C. in Miwe roll-in oven
Cooling: 1 hr. before gas packing in Komet S 501, with vacuum and CO2

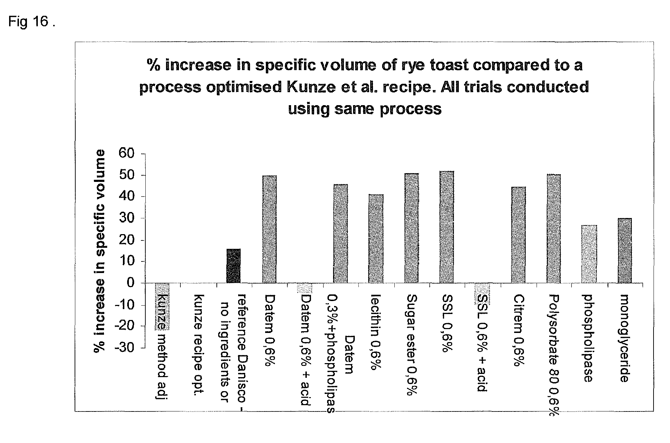

The results are shown in Figures 16-20.

Fig 16: Comparison of ingredients affecting specific volume in rye toast. The specific volumes are calculated as reduction compared to the recipe of Kunze but using the process of the present invention (set to zero - reference). The method according to claim 12 from Kunze adjusted to realistic water level in orange (dough consistency adjusted to 470 BU using farinograph - comparable to Basic dough consistency). The remaining trials are all conducted using Basic recipe (100% rye, 11,5% gluten based on flour, no olive oil) and process.

The best results are obtained using emulsifiers which strengthen gluten such as: Datem, lecithin, fatty acid sugar ester, SSL, Citrem, Polysorbate. (Colums in green.)

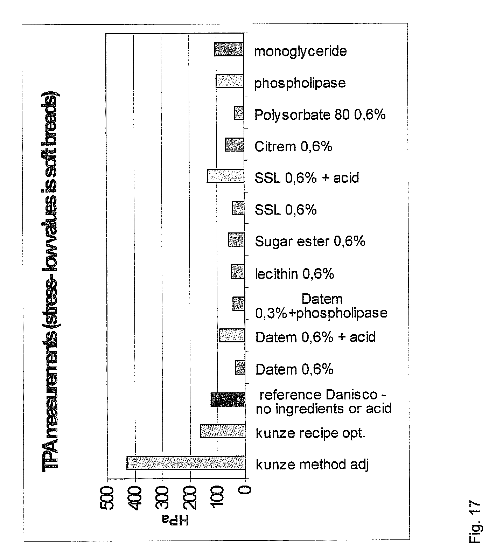

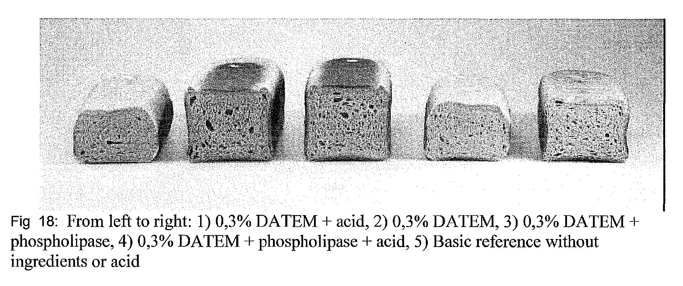

If the strengthening emulsifiers are added in combination with acid/sourdough then the positive effect is eliminated. (Columns in pink). (See fig 17 and 18.)

Phospholipase and glycolipase improve the specific volume. Comparable to the Basic reference without ingredients. Combination of lipase with lower levels of Datem gives volumes comparable to using high levels of Datem with no lipase. Column in blue

Addition of non gluten strengthening emulsifiers such as monoglyceride gives increase in volume comparable to phospholipase but the crumb structure is not acceptable column in dark green

Softness measurements in fig 17 show that the gluten strengthening emulsifiers also have a positive effect on softness when used in the recipe disclosed in this report. When using the emulsifiers in combination low dough pH (added soluble acids or sour dough) then the positive effect is not recognized (pink columns compared to light green). The main effect on softness is obtained by increased volume and not by complexation of monoglyceride to amylose as normally expected (dark green column).

Fig 18: Rye toast samples. Show effect of Datem in combination with acid (dough pH < 4,7). From left to right: 1) 0,3% Datem + acid, 2) 0,3% Datem, 3) 0,3% Datem + phospholipase, 4) 0,3% Datem + phospholipase + acid, 5) Basic reference without ingredients or acid.

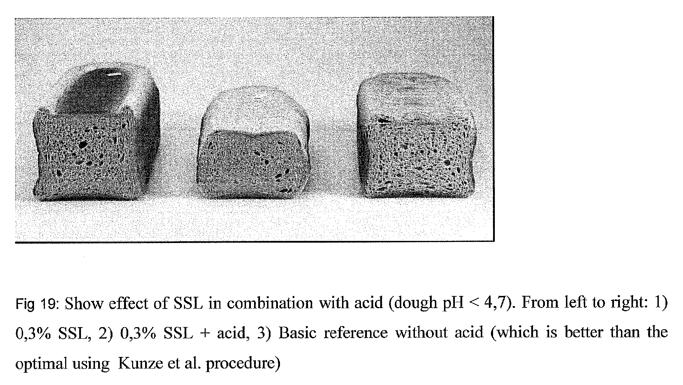

Fig 19: Rye toast samples. Show effect of SSL in combination with acid (dough pH < 4,7). From left to right: 1) 0,3% SSL, 2) 0,3% SSL + acid, 3) Basic reference without acid (which is better than the optimal using Kunze et al. procedure)

The results demonstrate that no positive effect is obtained on volume (see also fig. 16) nor crumb structure when adding gluten strengthening emulsifiers in a gluten containing recipe in combination with acid. Therefore it is necessary to have dough of above 4,7, pH preferably around 5,5 in order to obtain the benefits from ingredients, which strengthen the gluten network - such as Datem fig 18 and SSL fig 19.

Addition of emulsifiers such as Datem, SSL, Citrem, polysorbate, sugar esters etc. can further contribute to improve softness, however the effect is diminished/eliminated when used in rye dough of low pH dough - if acid or sour dough is added (see fig. 16-19)

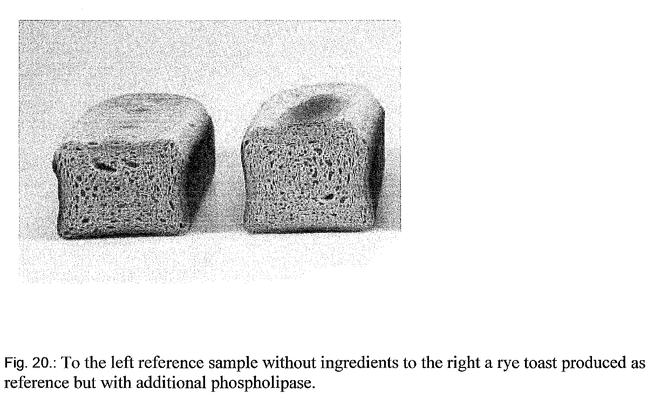

Fig. 20: Effect of phospholipase in Basic recipe. To the left reference sample without ingredients to the right a rye toast produced as reference but with additional phospholipase (TS-E 1008 dosed at 400 ppm on rye flour basis). Lipase gives some improvements on volume and crumb structure and texture (see comparative data in fig. 16-17). The Basic recipe includes rye flour, yeast, sugar, salt gluten and water. It is like the recipe described in example 4 trial no. 2, but without Journal 1652-86.

### Conclusion:

The contribution of gluten proteins is important, but the effects of ingredients such as emulsifiers can only be obtained if pH of dough is above 4,7. Basic procedure is approximately pH = 5,5-5,7

By using gluten it is possible to maintain high contents of rye flour and obtain rye toast quality characteristics (volume, softness, crumb structure, crumb texture) comparable to using high content of wheat flour (such as >80%).

Without wishing to be bound by theory, we believe that the main effect on specific volume and softeness of journal nr. 1652/86 is derived from the gluten strengthening emulsifier component - Datem.

### EXAMPLE 7 - comparison of rye toast (according to this invention) to standard wheat toast and standard commercial rye based products

Here, we demonstrate that it is possible to produce bakery products similar to standard wheat products using more than 70% of rye (or other materials) based on total cereal flour content.

The products produced have similar softness as products produced using mainly wheat flour.

Characteristics of commercial bread products (sampled from Germany, Finland, Sweden and Denmark) in which the majority of the cereal part is rye flour (that is more than 50% of the cereal flour - called mainly rye flour). These are compared to typical characteristics of bread products mainly composed of wheat flour or mainly wheat flour (more than 50% of flour is from wheat).

The quality characteristics used to describe the differences are:
- TPA measurements (stress measurements - an inverse measurement of softness) and resilience (meaurement on tolerance to compression force)).
- Acidity of bread - pH measurements.
- Specific volume

To demonstrate the effect of the rye bread produced by the present invention two examples of rye toast were selected for comparison (diagram colour dark blue).

The results from TPA measurements (fig 21 ) demonstrate that the texture of the rye toast is comparable to the pure wheat samples. Furthermore the pH of the rye products of the present invention can fall into the mainly rye category or the wheat category depending on whether an encapsulated acid/acidifier has been used or not.

The results are presented in Figures 21-24.

Fig. 21: Stress measurement. The higher the value the less soft the bread is. Or the more force is required to compress the bread slice. Light blue is commercial products containing above 50% rye flour. Darker blue is this invention containing rye flour above 90%. Yellow is pure wheat bread, while orange less than 50% is rye flour.

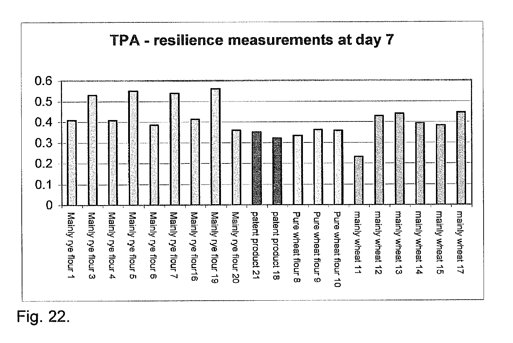

Fig. 22: Same colours as fig. 21. Measurement on crumb resilience. How well structure is maintained after compression.

Specific volume depends on the bakery application. To compare specific volumes the same process as described in example 9 (straight dough procedure has been used).

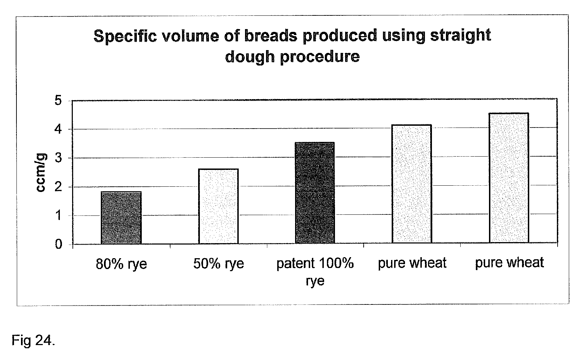

Fig 24: Comparison of specific volume of rye and wheat based products.

The results from fig 21-24. demonstrate that it is possible to obtain rye toast comparable to wheat toast using the Basic recipe.

### Conclusions:

- Typical mainly wheat based products (bread) have TPA stress values under 100. Measured at day 7. The pure wheat breads have values under 50. The products produced by the present invention have stress between 20-100 depending on specific recipe.
- Pure wheat bread has pH above 5. Most rye products have pH below 5. The products of the present invention can belong to any of these groups depending on whether encapsulated acids/sourdough have been used or not.
- Specific volumes are higher for the rye bread produced using the present invention than conventional rye breads. The rye bread produced by the present invention comparable to specific volume breads produced using high levels of wheat flour (>80%).

### EXAMPLE 8. Rye toast produced using rapid mixer (Chorleywood process)

### STANDARD TWEEDY RECIPE - Chorleywood process

100 % Rye flour
10 % gluten
2,5% g salt
5 % sugar
6 % yeast compressed
79 % Water
0,3% Calcium propionate
Ingredient: 1,8% journal no. 1622/86

Procedure (Tweedy mixer - high speed high shear mixer based on the Chorleywood process (CBP) principles from 1960).
Dough temperature: 26-27°C. using 11 Wh/kg.
Rest: 5 min
Scaling: 900 g/toast tin. Tin 10x9x27cm. With lid
Rest max 5 min.
Mould on Glimek: 1:4 - 2:4 - 3:14 - 4:12. 11 in each side
Proofing: 55 min at 35°C, 85%RH. In proofing cabinet, Miwe GBA
Baking: 30 min at 210°C. in Miwe roll-in oven
Cooling: 1 hr. before gas packing in Komet S 501, with vacuum and CO2
Volume was determined using the rape seed displacement method.
Softness was determined at day 7. using a texture analyzer (TPA ).

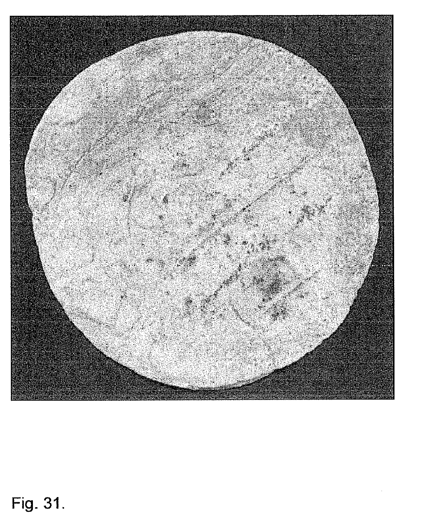

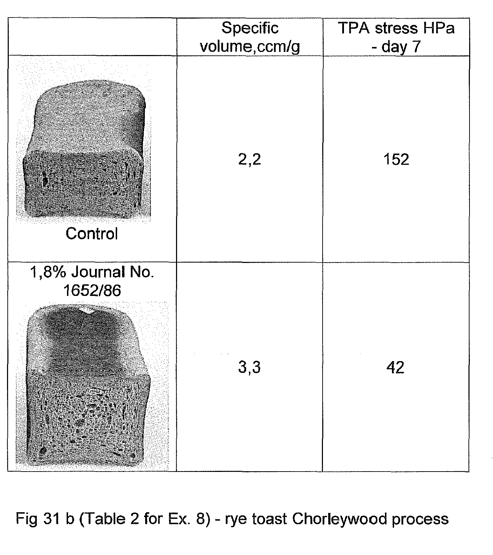

The results are presented as Table 2 in Fig 31b.

### EXAMPLE 9. Rye toast produced by straight dough procedure.

### STANDARD TOAST RECIPE

100 % Rye flour
10 % gluten, Kroner Stärke
2,5% g salt
5 % sugar
6 % yeast compressed
70 % Water
0,3% Calcium propionate
1,4% journal no. 1652/85

### Procedure:

Mix - 1 min. dry, 2 + 5 min. Using a spiral mixer from Diosna.
Dough temp. 27°C.
Rest: 5 min at ambient temperature (22°C)
Scaling: 750 g, toast tin. Tin dimensions 10x9x27cm. With lid
Mould on Glimek: 1:4 - 2:4 - 3:14 - 4:12. 11 in each side
Proofing: 55 min at 35°C, 85%RH. In proofing cabinet, Miwe GBA Baking: 30 min at 210°C. in Miwe roll-in oven
Cooling: 1 hr. before gas packing in Komet S 501, with vacuum and CO2 Volume was determined using the rape seed displacement method. Softness was determined at day 7. using a texture analyzer (TPA ).

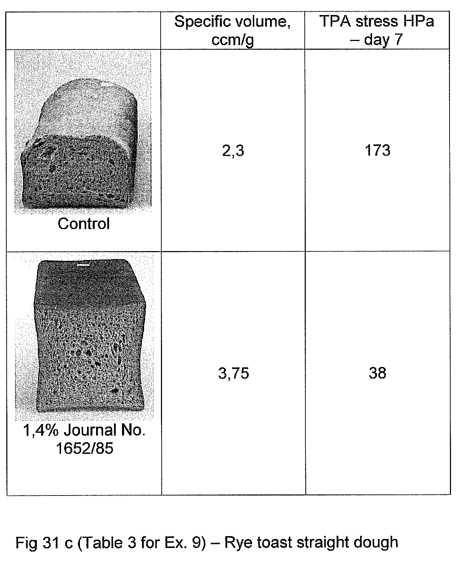

The results are presented as Table 3 in Fig 31c.

### EXAMPLE 10. Rye toast produced using Sponge and dough procedure.

### TOAST - RYE SPONGE & DOUGH

### Recipe:

Dosage based on flour.

### Sponge:

| **Ingredients** | **%** |
|---|---|
| rye flour (Type 997) | 60 |
| Gluten (new German) | 8 |
| Water | 51,4 |
| Rape seed oil | 2 |
| Compressed yeast | 3 |
| PANODAN^{®}A2020 | 0,65 |
| DIMODAN^{®}PH 100 | 1,0 |

### Dough:

| **Ingredients** | **%** |
|---|---|
| Rye flour (type 997) | 40 |
| Gluten | 2 |
| Salt | 1,5 |
| Calcium Propionate | 0,25 |
| Compressed yeast | 0,9 |
| Sugar | 8 |
| Water | 27,6 |
| Ascorbic acid | 500 ppm |
| GRINDAMYL™POWERBake 900 | 300 ppm |
| Enzyme 2 | 300 ppm |

| | |
|---|---|
| * NOTE: total amount of water is 79% - 65% in the sponge and 35% in the dough phase | |

### Equipment:

Mixer: Hobart (sponge) - Diosna (dough)
Proofing cabinet. :Miwe GBA
Moulder: Glimek
Oven: MIWE Roll in

### Procedure:

### Sponge:

1. Mix all ingredients 1 min 1^{st} speed - 4 min 2^{nd} speed on Hobart
2. Sponge temp. must be app. 24°C
3. Ferment sponge 3 hours at 25°C, 85% RH

### Dough:

4. Mix sponge and all remaining ingredients EXCEPT SALT for 1 min low - 2 min high on spiral mixer, Diosna Add salt - mix 8 min high speed
5. Scale 900 g mould (for toast tins 27x11x9 cm.)
6. Rest dough 10 min at ambient temperature
7. Mould on Glimek: 1:4 - 2:3 - 3:15 - 4:12 - width: 8 in both sides
8. Put dough into tins
9. Proof to height (about 45 min) at 38°C, 85% RH (Miwe GBA)
10. Bake 30 min. 205°C. with steam ( Miwe roll-in oven)
11. Take breads out of tins and cool for 70 min before packing

On mixing the two components a dough according to the present invention is formed.

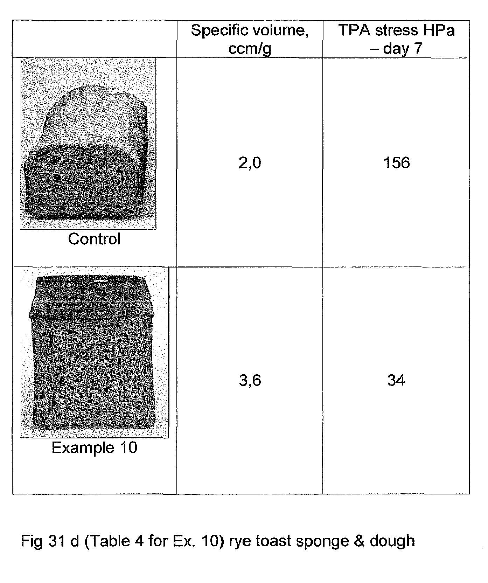

The results are presented as Table 4 in Fig 31d.

### EXAMPLE 11. Rye rolls

### STANDARD ROLLS RECIPE

100 % Rye flour
10 % gluten, Kroner Stärke
2,5 % salt
5 % sugar
6 % yeast compressed
70 % Water
1,4% Journal no. 1652/88
Mix : 1 min. dry mix - 2 + 5 min. Diosna (spiral mixer, Diosna) Dough temperature: 26°C.
Rest: 5 min
Scaling: 2000g. / 30 pieces of 67 g
Proofing: 45 min at 34°C, 85%RH in proofing cabinet, Miwe GBA
Baking 18 min at 205 C with steam, in Miwe Roll-in oven

**Table 8**

| | Specific volume, ccm/g |
|---|---|
| Control | 2,5 |
| 1,4% Journal no. 1652/88 | 4,3 |

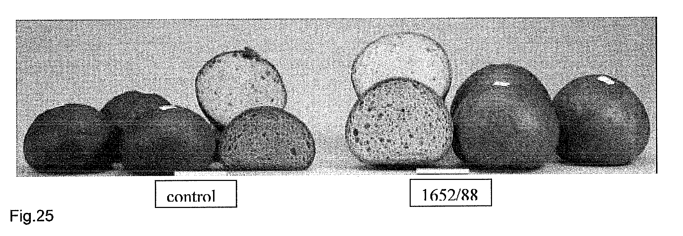

The results are shown in Fig.25.

### EXAMPLE 12. Burger buns

### RECIPE

100 % Rye flour
10 % gluten, Kroner Stärke
2,5 % salt
5 % sugar
6 % yeast compressed
79 % Water
2,88 % journal no. 1652-78-2
Mix : 1 min. dry mix - 2 + 5 min. Spiral mixer, Diosna.
Dough temperature: 26°C.
Rest: 5 min
Scaling: Dough pieces of 90 g/piece
Rest 5 min before compressing rounded dough to 80% of the area of the hamburger tins (4 inch.)
Proofing: 45 min at 34°C, 85%RH in proofing cabinet, Miwe GBA
Baking 12 min at 230°C in deck oven (Miwe Condo)

**Table 9.**

| | Specific volume, ccm/g |
|---|---|
| Control | 2,05 |
| 2,88% Journal no. 1652/78-2 | 3,40 |

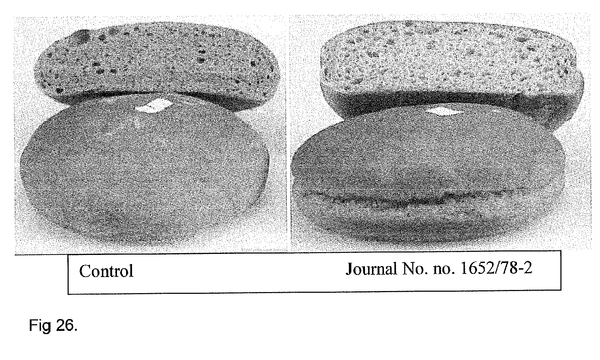

The results are shown in Fig 26.

### EXAMPLE 13. Rye brioche.

### Standard Brioche recipe

100% Rye flour
10% gluten, Kroner stärke
1,2% salt
15 % sugar
1,4 % yeast (Brown dry yeast- Fermipan)
20,4 % Whole eggs - fresh
19,1 % Butter, unsalted
0,3% propionate
54% Water
Ingredient: 2.25% 1652/93
Mix - Diosna spiral mixer : 1 min. dry, speed 1- add eggs and water mix 2 min. speed 1 and 5,5 min. at speed 2 - add butter mix 2,5 min. speed1 and 1,5 min. speed 2.
Dough temp: 25°C.
Just after mixing scale and mould at 900g baked with lids - toast tin (27x11x9 cm)
Proofing: 110 min. 30°C.- 75%Rh. in proofing cabinet, Miwe GBA
Baking 33 min- 10 min. 210°C. + 18 min. 200°C. + 5 min. 180°C. with steam. (Miwe roll-in oven).
Cooling: 1 hr. before gas packing in Komet S 501, with vacuum and CO2
Volume was determined using the rape seed displacement method.
Softness was determined at day 7. using a texture analyzer (TPA).

| | Specific volume, ccm/g | TPA stress day 7 HPa |
|---|---|---|
| 2,25% Journal No. 1652/93 | 3,28 | 84.8 |

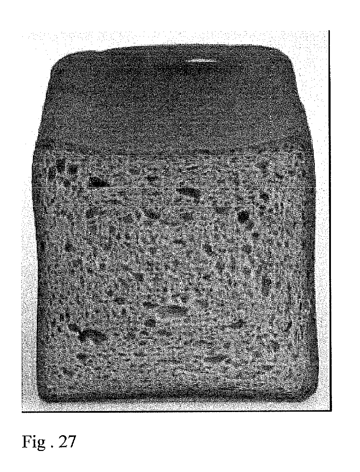

The results are shown in Figure 27.

### EXAMPLE 14. Rye baguette.

100 % Rye flour
10 % gluten, Kroner Stärke
2,5% salt
5 % sugar
6 % yeast compressed
70 % Water
1,4% Journal nr. 1652/87
Mix : 1 min. dry mix - 2 + 5 min. Spiral mixer, Diosna. Dough temperature: 26°C.
Rest: 5 min
Scaling: 350g.
Mould in baguette moulder, from Glimek
Proofing: 45 min at 34°C, 85%RH in proofing cabinet, Miwe GBA
Cut 4-5 slices in the surfaces
Baking 18 min. at 205 C with steam, in Miwe Roll-in oven

| | Specific volume, ccm/g |
|---|---|
| Control | 2,2 |
| 1,4% Journal no. 1652/87 | 4,3 |

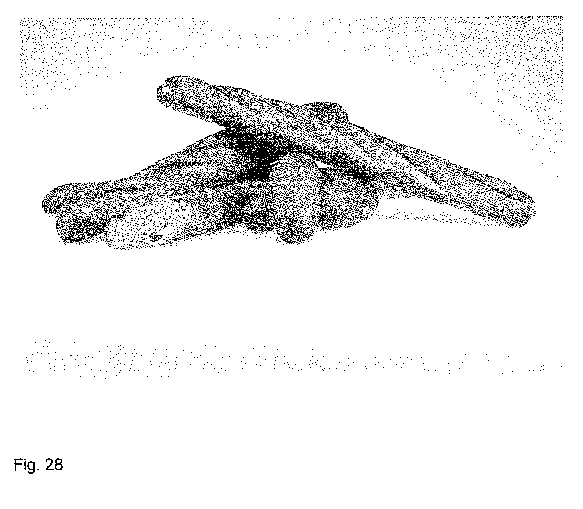

The results are shown in Fig. 28.

### EXAMPLE 15. Rye grissini (bread sticks)

### GRISSINI RECIPE

100 % Rye flour
10 % gluten, Kroner Stärke
2,5 % salt
5 % sugar
6 % yeast compressed
79 % Water
1,4% journal no. 1652/95

### Procedure :

Mix - 1 min. dry, 2 + 5 min. spiral mixer (Diosna)
Rest: 5 min
Scale the dough pieces at 20g.
Rest: 5 min
Mould them out at 20 cm
Proofing: 55 min at 35°C, 85%RH in proofing cabinet, Miwe GBA
Baking: 12 min at 230°C (dech oven,Miwe condo).
Cooling: 25 min. before packing

| | Specific volume, ccm/g |
|---|---|
| Control | 2,5 |
| 1,4% Journal no. 1652/95 | 4,3 |

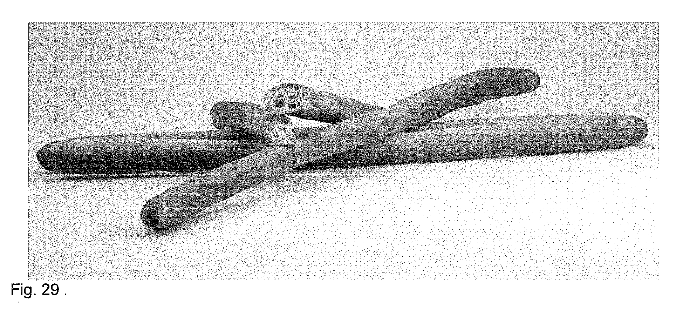

The results are shown in Fig. 29.

### EXAMPLE 16. Rye pita

### STANDARD PITA RECIPE

100 % Rye flour
10 % gluten, Kroner Stärke
2,5 % salt
5 % sugar
6 % yeast compressed
79 % Water
1,4% 1652/90

### Procedure :

Mix -1 min. dry, 2 + 5 min. spiral mixer (Diosna)
Rest: 5 min
Sheet the dough according to: 20-15-10-5 mm. Cut the dough sheet using a circular cutter of 14 cm. on diameter.
Proofing: 55 min at 35°C, 85%RH in proofing cabinet, Miwe GBA
Baking: 12 min at 230°C (dech oven, Miwe condo).
Cooling: 25 min. before packing

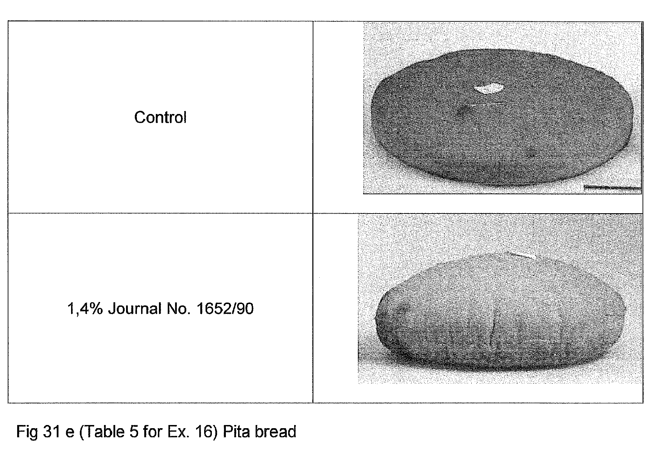

The results are presented as Table 5 in Fig 31e.

### EXAMPLE 17. Rye pizza

### STANDARD PIZZA RECIPE

100 % Rye flour
10 % gluten, Kroner Stärke
2,5 % salt
5 % sugar
6 % yeast compressed
79 % Water
1,4% Journal 1652/92

### Procedure :

Mix -1 min. dry, 2 + 5 min. spiral mixer (Diosna)
Rest: 5 min
Sheet the dough according to: 20-15-10-5-3 mm. Cut the dough sheet using a circular cutter of 20 cm. on diameter.
Proofing: 55 min at 35°C, 85%RH in proofing cabinet, Miwe GBA
Baking: 9 min at 230°C (dech oven,Miwe condo).
Cooling: 25 min. before packing

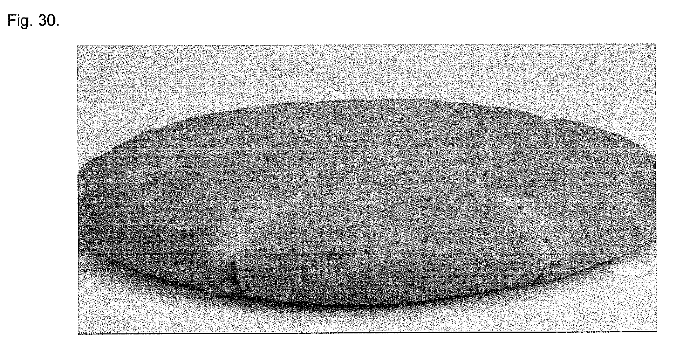

The results are shown in Fig. 30.

### EXAMPLE 18. Rye tortilla.

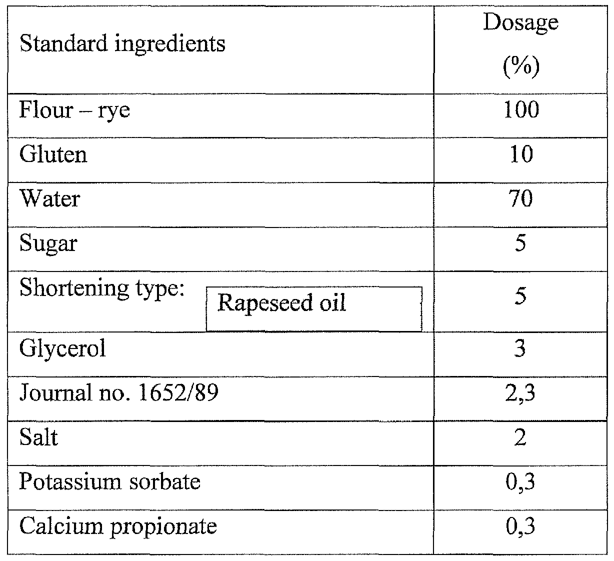

### Procedure:

Mixing: 2 min at low speed and 4,5 min at high speed in spiral mixer.
The dough temperature was 30°C.
1350 g dough is used for moulding.

The dough pieces rest 5 minutes in a proofing chamber before baking.

The dough pieces are pressed and baked the tortilla machine (CFO 40).

| | |
|---|---|
| Pressing plates: | 200°C and 205°C |
| Baking process: | |
| Top: 252°C | Middle: 263°C |
| Bottom: 180°CSpeed: 60 rpm (30 sec) | |
| Packing setting: | 10 tortillas/plastic bag:40 vacuum |
| 40 Gas (carbon dioxide) | 78°C |

The results are shown on Fig. 31.

### PART B

### Example 1B. Results from Rapid Visco Analyser

Three samples were prepared according to the AACC method 76-21. The samples were as follows:
1. Sample 1: Control containing 3.5 g rye flour and 25 ml deionised water
2. Sample 2: 2 g rye flour , Enzyme 1 and 25 ml deionised water.
3. Experimental Sample 3: 5 g rye flour, 0,07g TSB 1111 and 25 ml deionised water

The active ingredients of TSB 1111 are a combination of distilled monoglycerides Dimodan RHR 70% and hydrocolloid (xanthan) no lipases are included in TSB 1111.

Samples were run in Rapid Visco Analyser using the standard profile according to the AACC method.

The results of the assay are shown in Figure 32.

Aside from using the TSB 1111, which is a combination of monoglyceride and hydrocolloid, in this case xanthan, however also other ingredients such as lipases, monoglycerides, SSL and Diacetyl Tartaric Acid Esters can be used to avoid too high degradation of starch during baking process. Furthermore inhibitors or feedback substrates, which are known to inhibit amylases, can also contribute to this effect.

TSB products are available from Danisco A/S

Figure 33 shows the effect of Enzyme 1 in wheat flour containing systems.

### Example 2B. Results from Kieffer measurements:

Kieffer method using the texture analyzer

A piece of dough (20 g of dough produced using the method described in Example 4) was pressed into the Kieffer rig. Measurements were conducted after 5 min or 10 min rest at room temperature (depending on the gas cell development). The dough resistance gives information of the strength of the dough while the distance gives information on the extensibility/stretchability of the dough.

| Treatment | Mixing energy (Wh/kg) | Kieffer force | Kieffer distance | pH in the dough measured 15 min after mixing | pH in the end product |
|---|---|---|---|---|---|
| Control | 9,5 | 8 | 15 | 5,7 | 6,0 |
| TSB 1111 (1,6%), TSB 1130 (1%) | 9,5 | 16 | 23 | 5.7 | 6,0 |
| TSB 1111 (1,6%), TSB 1131 (1%) | 9,5 | 14 | 25 | 5.72 | 6,0 |
| TSB 1111 (1,6%), TSB 1130 (1%) sodium bicarbonate (0,3%) | 11 | 23 | 27 | 6.19 | 6,48 |

The addition of Hexose oxidase in the composition increases dough resistance (TSB 1130 contains Hexose oxidase, TSB 1131 is similar to TSB 1130 except that it does not contain Hexose oxidase). Furthermore the addition of ingredients that can increase pH (such as sodium bicarbonate) can contribute to improved gluten network formation.

### Example 3B Rye toast application (using rye and no sourdough) in a Chorleywood process.

A dough was prepared using a Tweedy mixer, which is a high speed high shear mixer based on the Chorleywood process (CBP) the principles of which date from the 1960s, using the following ingredients:
2500 g of rye flour 2006009 type 997.
250 g gluten (vital gluten EMCEvit C)
62,5 g salt
125 g sugar on flour
150 g yeast compressed
TSB 1111 (dosage 1.6% on rye flour) and TSB 1131 (1% on rye flour) and additional 0,3% DIMODAN PH100.
Water addition 82% of rye flour
and the following conditions:

Mix with a mixing energy between 9.5-11 Wh/per kg
Dough temperature 25°C

After mixing in a Tweedy mixer (CBP) the dough was allowed to rest for 10min at room temperature. Then 900 g dough samples were added per DK toast tin. Four pieces were used for texture profile analysis (TPA) measurements (for softness determination over a period of 14 days storage at room temperature) and 1 piece was used for volume measurements.

The samples were baked at 200°C for 30 minutes using a Miwe roll in oven. The volume and toast weight was recorded and specific volume was recorded.

The products were easy to slice just after cooling. Often it can be a problem when using high levels of rye. The specific volume for this product was 3.1 ml/g.

The firmness data was similar to standard wheat toast data produced using GRINDAMYL™ MAXLIFE U4, PANODAN™ A2020 (DATEM) and DIMODAN® HP 75/B.

Firmness measurements (low values show that the bread is soft whilst high values show that it is firm).

| | Firmness |
|---|---|
| Day 1 | 30 Hpa |
| Day 7 | 40 Hpa |
| Day 14 | 46 Hpa |

### Method used to measure pH in the end product:

1. 2.5 g is weighed and 12 ml of deionised water is added.
2. The crumbs are homogenised for 30 sec at 13500 RPM using an ultra turrex.
3. The pH is measured.

Results from rye toast bread go from pH 5.9 to 6.5 using the procedure described in example 3. The pH given in example 3B is when the pH is measured directly on the dough 15 min after mixing.

The pH meter used is a PHM 220. Meter Lab.

The samples showed taste improvements in that they were less bitter than rye bread baked without the above mentioned ingredients. The taste improvements were achieved by use of the bacterial xylanase. The literature (J.A. Delcour et al. 1989 Cereal Chem. 66(2): 107-111) indicates that the insoluble pentosans can contribute negatively to darkness, dull gray surface and bitter taste. Therefore the bacterial xylanases without endo-amylase were used. Furthermore sugar was added and the increase of pH by the sodium bicarbonate improved crumb structure (less gummy) and resulted in a less bitter taste.

Figure 34 shows a slice from a rye toast produced using a Chorleywood process. It can be seen that the bread is similar to that produced using wheat flour.

### Example 4B. Bread made without sourdough using a straight dough procedure and 100% rye flour

Samples were prepared according to the following recipe and process:

| Sample 1 | Control |
|---|---|
| 2000 | g. Rye flour type 997 |
| 50 | g. Salt |
| 120 | g. Yeast |
| 1300 | g. Water |

Composition according to the invention

| Sample 2 | |
|---|---|
| 2000 | g. Rye flour type 997 |
| 50 | g. Salt |
| 120 | g. Yeast |
| 1300 | g. Water |
| 34 | g TSB 1132 |

| Sample 3 | Control |
|---|---|
| 2000 | g. Rye flour type 997 |
| 50 | g. Salt |
| 120 | g. Yeast |
| 1300 | g. Water |
| | Liquid sour |

TSB 1132 is a combination of ascorbic acid, enzyme complex, monoglyceride and hydrocolloid.
Add water and yeast - mix 5 min slow
Dough temp ca.25°C
Scale 800 g - rest for 15 min
Mould by hand
Proof 35 min - 35°C, 85% relative humidity
Bake for 35 min in Miwe stone deck oven (prog nr. 6)

After baking the breads were cooled for 10 minutes before wrapping in plastic foil.

After 70 minutes 1 bread sample was unpacked and used for weighing and evaluation The remaining bread samples were wrapped and store for softness measurements

Dough temperature is achieved by regulating the water temperature. The water temperature is dependant on how strong the gluten network is developed in the dough system. The stronger the dough the more heat the mixer generates in the dough.

For these samples in a Diosna mixer the water temperature was approx. 31 °C

The recipe samples and their method of preparation had the following characteristics:
a) Easy to process (non sticky and sliceable)
b) Fine and even crumb structure and at least comparable in volume and shape to using sourdough. However the samples had no sour taste.
c) Softness at least as when using sourdough

Bread without sourdough (samples 1 and 2) has a pH of 5.65. Bread made with liquid sour (sample 3) has a pH of 4.5.

As can be seen from these results, examples according to the present invention produce rye flour baked products with characteristics similar to those obtained for a standard wheat flour product. From Figures 34 to 37, it can be clearly seen that bread made according to the invention shows a marked improvement over the product obtained from conventional rye flour dough. In particular, Figure 37 shows the much improved pore structure of the rolls prepared in accordance with the present invention.

### Summary Aspects

Aspects of the present invention will now be described by way of numbered paragraphs.
1. A rye cereal flour composition comprising a flour, an emulsifier and/or an hydrocolloid, wherein a high percentage of the flour is rye cereal flour, such as at least 60%, and wherein rye cereal flour bakery products and rye cereal flour baked products produced using the composition have improved rheological properties and/or increased specific volume and/or TPA values similar to those of wheat flour bakery products and wheat flour baked products.
2. A rye cereal flour composition according to paragraph 1 wherein the flour comprises at least 60%, or at least 70%, or at least 80%, or at least 85%, or at least 90% or at least 95%, rye cereal flour.
3. A rye cereal flour composition according to paragraph 2 wherein the flour comprises 100% rye cereal flour.
4. A rye cereal flour composition according to any of paragraphs 1 to 3 further comprising yeast.
5. A rye cereal flour composition according to any of paragraphs 1 to 4 further comprising a chemical leavening agent.
6. A rye cereal flour composition according to paragraph 5 further comprising baking powder or a functional equivalent thereof.
7. A rye cereal flour composition according to any of paragraphs 1 to 6 further comprising ascorbic acid.
8. A rye cereal flour composition according to any of paragraphs 1 to 7 further comprising gluten.
9. A rye cereal flour according to paragraph 8 comprising at least 1% gluten, such as at least 5%, at least 10%, at least 15%, at least 20%, at least 25% or at least 30% gluten as a percentage of the total composition.
10. A rye cereal flour composition according any of paragraphs 1 to 9 further comprising at least one enzyme.
11. A rye cereal flour composition according to paragraph 10 wherein the enzyme is selected from the group consisting of xylanases, starch degrading enzymes like exogenic amylases, oxidoreductases, lipases including phospholipases and glycolipases, acyl transferases and combinations thereof.
12. A rye cereal flour composition according to paragraph 10 or 11 wherein the enzyme is xylanase.
13. A rye cereal flour composition according to paragraph 12 wherein the xylanase is free of or substantially free of endo-amylase and/or glucanase activity.
14. A rye cereal flour composition according to paragraph 12 or 13 wherein the xylanase is a bacterial xylanase.
15. A rye cereal flour composition according to any one of paragraphs 1 to 14 wherein the hydrocolloid is selected from the group consisting of carrageenan, starch, pectin, alginate, gelatine, locust bean gum (LBG), gellan, xanthan, carboxy methyl cellulose (CMC), guar gum, depolymerised guar, acacia gum, konjac gum, agar, tamarind, tragacanth, beta-glucan, arabinoxylan, karaya, curdlam, chitosan and combinations thereof.
16. A rye cereal flour composition according to paragraph 15 wherein the hydrocolloid is xanthan.
17. A rye cereal flour composition according to any of paragraphs 1 to 16 wherein the hydrocolloid is present at a concentration between 0.01% and 2.5% such as between 0.05% and 2%, between 0.07% and 1%, or between 0.1 % and 0.7%, as a percentage of the total composition.
18. A rye cereal flour composition according to any of paragraphs 1 to 17 wherein the emulsifier is selected from the group consisting of distilled monoglycerides; monoglycerides; diglycerides; esters of mono- and diglycerides; polyglycerol esters of fatty acids; polyglycerol polyrincinoleate; propylene glycerol esters of fatty acids; sorbitan monostearates; sorbitan tristearates; sodium stearoyl lactylates; calcium stearoyl lactylates; lecithins; and diacetyl tartric acid esters of mono- and diglycerides and combinations thereof.
19. A rye cereal flour composition according to paragraph 18 wherein the emulsifier is a monoglyceride.
20. A rye cereal flour composition according to any of paragraphs 1 to 19 wherein the emulsifier is present at a concentration between 0.2% and 4% such as, between 0.4% and 4%, between 0.5% and 3%, between 0.7% and 2.5%, between 0.8% and 2.2%, or between 0.9% and 2%, as a percentage of the total composition.
21. A rye cereal flour composition according to any of paragraphs 1 to 20 further comprises an anti-staling enzyme.
22. A rye cereal flour composition according to any of paragraphs 1 to 21 which includes any of the following baking additives: lipases, oxidative enzymes, DATEM, standard strengthening emulsifiers and oxidising agents such as bromate or azodicarbonamide (ADA).
23. A rye cereal flour composition according to paragraph 22 wherein the oxidative enzyme is selected from the group consisting of glucose oxidase, pyranose oxidase, sulfhydryl oxidase, maltose oxidase, and carbohydrate oxidase, such as one that oxidises maltose, e.g. hexose oxidase (HOX).
24. A rye cereal flour composition according to any of paragraphs 1 to 23 having a pH greater than 4, such as a pH greater than 4.5, a pH greater than 5, a pH greater than 5.1, a pH greater than 5.2, a pH greater than 5.3, a pH greater than 5.3, a pH greater than 5.4, a pH greater than 5.4, a pH greater than 5.5 or a pH greater than 5.6.
25. A rye cereal flour composition according to any of paragraphs 1 to 24 capable of producing rye cereal flour bakery products or rye cereal flour baked products having rheological properties substantially similar to wheat flour bakery products or wheat flour baked products.
26. A process for producing a rye cereal flour bakery product comprising admixing a composition according to any of paragraphs 1 to 25.
27. A process according to paragraph 26 wherein the composition is admixed with a liquid such as water.
28. A process for producing a rye cereal flour baked product comprising baking a bakery product prepared according to paragraph 26 or 27.
29. Use of a rye cereal flour composition according to any of paragraph 1 to 25 in the preparation of a bakery product.
30. Use of a rye cereal flour composition according to any of paragraphs 1 to 25 in the preparation of a rye cereal flour baked product.
31. Use of an emulsifier and/or an hydrocolloid for producing a baked product or bakery product comprising a high percentage of rye cereal flour, such as at least 60%, or at least 70%, or at least 80%, or at least 85%, or at least 90%, or at least 95% or about 100%, having improved rheological properties and/or increased specific volume and/or TPA values similar to those of wheat flour bakery products and wheat flour baked products.
32. Use according to paragraph 31 wherein the emulsifier is as defined in any of paragraphs 18 to 20.
33. Use according to paragraph 31 to 32 wherein the hydrocolloid is as defined in any of paragraphs 15 to 17.
34. A rye cereal flour bakery product prepared by admixing a composition according to any of paragraphs 1 to 25.
35. A rye cereal flour baked product prepared by baking a rye cereal flour bakery product according to paragraph 34.
36. A baked product or bakery product comprising a high percentage of rye cereal flour, such as at least 60%, or at least 70%, or at least 80%, or at least 85%, or at least 90%, or at least 95% or about 100%, and an emulsifier and/or an hydrocolloid, wherein the baked product has an increased specific volume and/or TPA values similar to those of wheat flour bakery products and wheat flour baked products.
37. A baked product or bakery product according to paragraph 35 or 36 wherein the baked product is a bread.
38. A baked product or bakery product according to paragraph 35 or 36 wherein the baked product is a processed bread.
39. A baked product or bakery product according to paragraph 35 or 36 wherein the baked product is a toast bread.
40. A baked product or bakery product according to paragraph 35 or 36 wherein the baked product is a roll.
41. A baked product or bakery product according to paragraph 35 or 36 wherein the baked product is a cake.
42. A baked product or bakery product according to paragraph 35 or 36 wherein the baked product is an extruded product.
43. A baking additive composition comprising an emulsifier and/or a hydrocolloid, wherein the emulsifier and/or the hydrocolloid allow for the production of bakery products and baked products having improved rheological properties from rye cereal grain.
44. A composition substantially as described herein.
45. A process substantially as described herein.
46. A use substantially as described herein.
47. A bakery product substantially as described herein.
48. A baked product substantially as described herein.
49. A baking additive substantially as described herein.

Further aspects of the present invention will now be described by way of numbered paragraphs.
1. A composition comprising or is made from flour, an emulsifier and/or an hydrocolloid, wherein a high percentage of the flour is the flour of rye cereal grain.
2. A method comprising admixing flour with an emulsifier and/or an hydrocolloid, wherein a high percentage of the flour is the flour of rye cereal grain.
3. Use of an emulsifier and/or an hydrocolloid in the preparation of a composition comprising or is made from a high percentage of flour that is the flour of a rye cereal grain.
4. The invention according to any one of the preceding paragraphs wherein the composition is a dough product for preparing a baked product.
5. The invention according to any one of paragraphs 1 to 3 wherein the composition is a bakery product for preparing a baked product.
6. The invention according to any one of paragraphs 1 to 3 wherein the composition is a baked product.
7. The invention according to any one of the preceding paragraphs wherein the baked product is a bread.
8. The invention according to any one of the preceding paragraphs wherein the baked product is a toast bread.
9. The invention according to any one of the preceding paragraphs wherein the high percentage is at least 60% of the total weight of the composition.
10. The invention according to any one of the preceding paragraphs wherein the high percentage is at least 65% of the total weight of the composition.
11. The invention according to any one of the preceding paragraphs wherein the high percentage is at least 70% of the total weight of the composition.
12. The invention according to any one of the preceding paragraphs wherein the composition further comprises a leavening agent.
13. The invention according to any one of the preceding paragraphs wherein the composition further comprises gluten.
14. The invention according to any one of the preceding paragraphs wherein the composition further comprises at least one enzyme.
15. The invention according to paragraph 14 wherein the enzyme is at least xylanase.
16. The invention according to paragraph 15 wherein the xylanase is free of or substantially free of endo-amylase and/or glucanase activity.
17. The invention according to any one of the preceding paragraphs wherein the hydrocolloid is selected from the group consisting of carrageenan, starch, pectin, alginate, gelatine, locust bean gum (LBG), gellan, xanthan, carboxy methyl cellulose (CMC), guar gum, depolymerised guar, acacia gum, konjac gum, agar, tamarind, tragacanth, beta-glucan, arabinoxylan, karaya, curdlam, chitosan and combinations thereof.
18. The invention according to any one of the preceding paragraphs wherein the hydrocolloid is xanthan.
19. The invention according to any one of the preceding paragraphs wherein the emulsifier is selected from the group consisting of distilled monoglycerides; monoglycerides; diglycerides; esters of mono- and diglycerides; polyglycerol esters of fatty acids; polyglycerol polyrincinoleate; propylene glycerol esters of fatty acids; sorbitan monostearates; sorbitan tristearates; sodium stearoyl lactylates; calcium stearoyl lactylates; lecithins; and diacetyl tartric acid esters of mono- and diglycerides and combinations thereof.
20. The invention according to any one of the preceding paragraphs wherein the emulsifier is a monoglyceride.
21. The invention according to any one of the preceding paragraphs wherein the composition has a pH greater than 4.
22. A bread made from flour, an emulsifier and/or an hydrocolloid, wherein a high percentage of the flour is rye flour.
23. A bread made from flour, an emulsifier and/or an hydrocolloid, wherein a high percentage of the flour is rye flour, wherein the bread is toasted.
24. A bread made from flour, an emulsifier and/or an hydrocolloid, wherein about 90% or more of the flour is rye flour.
25. A bread made from flour, an emulsifier and/or an hydrocolloid, wherein about 90% or more of the flour is rye, wherein the bread is toasted.
26. A bread made from flour, an emulsifier and/or an hydrocolloid, wherein about 100% of the flour is rye flour.
27. A bread made from flour, an emulsifier and/or an hydrocolloid, wherein about 100% of the flour is rye, wherein the bread is toasted.
28. A bread according to any one of paragraphs 23 to 28 wherein the bread is made from rye flour, an emulsifier and/or an hydrocolloid, salt, yeast and water, and optionally sugar and/or gluten.
29. A bread according to any one of paragraphs 22 to 28 wherein the bread is made from rye flour, an emulsifier and/or an hydrocolloid, salt, yeast, water, and gluten and optionally sugar.
30. A composition substantially as described herein.
31. A process substantially as described herein.
32. A use substantially as described herein.
33. A bakery product substantially as described herein.
34. A baked product substantially as described herein.

There now follows some preferred aspects of the present invention.
1. A dough comprising:
   System (a); and
   System (b);
      wherein System (a) comprises:
      (i) at least 80% (bakers' %) rye flour by weight of System (a) and
      (ii) at least 5% (bakers' %) exogeneous gluten by weight of System (a);
      wherein the dough is at a pH from about pH 5 to about pH 7.5;
      wherein System (b) comprises at least a leavening agent;
      wherein if System (a)(ii) comprises from 5% (bakers' %) to 9% (bakers' %) exogeneous gluten then the dough additionally comprises System (c);
      wherein System (c) comprises at least one gluten strengthener;
      wherein if System (a)(ii) comprises more than 9% (bakers' %) exogeneous gluten then the dough optionally comprises System (c), wherein System (c) comprises at least one gluten strengthener;
      wherein the dough additionally comprises System (d); wherein System (d) comprises at least one or more dough additives.
2. A dough comprising:
   System (a); and
   System (b);
      wherein System (a) comprises:
      (i) at least 80% (bakers' %) rye flour by weight of System (a) and
      (ii) at least 5% (bakers' %) exogeneous gluten by weight of System (a);
      wherein the dough is at a pH from about pH 5 to about pH 7.5;
      wherein System (b) comprises at least a leavening agent;
      wherein if System (a)(ii) comprises from 5% (bakers' %) to 9% (bakers' %) exogeneous gluten then the dough additionally comprises System (c);
      wherein System (c) comprises at least one gluten strengthener selected from an emulsifier and/or an enzyme;
      wherein if System (a)(ii) comprises more than 9% (bakers' %) exogeneous gluten then the dough optionally comprises System (c), wherein System (c) comprises at least one gluten strengthener;
      wherein the dough additionally comprises System (d); wherein System (d) comprises at least one or more dough additives.
3. A dough comprising:
   System (a); and
   System (b);
      wherein System (a) comprises:
      (i) at least 80% (bakers' %) rye flour by weight of System (a) and
      (ii) at least 5% (bakers' %) exogeneous gluten by weight of System (a);
      wherein the dough is at a pH from about pH 5 to about pH 7.5;
      wherein System (b) comprises at least a leavening agent;
      wherein if System (a)(ii) comprises from 5% (bakers' %) to 9% (bakers' %) exogeneous gluten then the dough additionally comprises System (c);
      wherein System (c) comprises at least one gluten strengthener;
      wherein if System (a)(ii) comprises more than 9% (bakers' %) exogeneous gluten then the dough optionally comprises System (c), wherein System (c) comprises at least one gluten strengthener;
      wherein the dough additionally comprises System (d); wherein System (d) comprises at least one or more dough additives;
      wherein the gluten is vital gluten.
4. A dough comprising:
   System (a); and
   System (b);
      wherein System (a) comprises:
      (i) at least 80% (bakers' %) rye flour by weight of System (a) and
      (ii) at least 5% (bakers' %) exogeneous gluten by weight of System (a);
      wherein the dough is at a pH from about pH 5 to about pH 7.5;
      wherein System (b) comprises at least a leavening agent;
      wherein if System (a)(ii) comprises from 5% (bakers' %) to 9% (bakers' %) exogeneous gluten then the dough additionally comprises System (c);
      wherein System (c) comprises at least one gluten strengthener selected from an emulsifier and/or an enzyme;
      wherein if System (a)(ii) comprises more than 9% (bakers' %) exogeneous gluten then the dough optionally comprises System (c), wherein System (c) comprises at least one gluten strengthener.
      wherein the dough additionally comprises System (d); wherein System (d) comprises at least one or more dough additives;
      wherein the gluten is vital gluten.
5. A dough comprising:
   System (a); and
   System (b);
      wherein System (a) comprises:
      (i) at least 80% (bakers' %) rye flour by weight of System (a) and
      (ii) at least 5% (bakers' %) exogeneous gluten by weight of System (a);
      wherein the dough is at a pH from about pH 5 to about pH 7.5;
      wherein System (b) comprises at least a leavening agent;
      wherein the dough additionally comprises System (c);
      wherein System (c) comprises at least one gluten strengthener;
      wherein the dough additionally comprises System (d); wherein System (d) comprises at least one or more dough additives.
6. A dough comprising:
   System (a); and
   System (b);
      wherein System (a) comprises:
      (i) at least 80% (bakers' %) rye flour by weight of System (a) and
      (ii) at least 5% (bakers' %) exogeneous gluten by weight of System (a);
      wherein the dough is at a pH from about pH 5 to about pH 7.5;
      wherein System (b) comprises at least a leavening agent;
      wherein the dough additionally comprises System (c);
      wherein System (c) comprises at least one gluten strengthener selected from an emulsifier and/or an enzyme;
      wherein the dough additionally comprises System (d); wherein System (d) comprises at least one or more dough additives.
7. A dough comprising:
   System (a); and
   System (b);
      wherein System (a) comprises:
      (i) at least 80% (bakers' %) rye flour by weight of System (a) and
      (ii) at least 5% (bakers' %) exogeneous gluten by weight of System (a);
      wherein the dough is at a pH from about pH 5 to about pH 7.5;
      wherein System (b) comprises at least a leavening agent;
      wherein the dough additionally comprises System (c);
      wherein System (c) comprises at least one gluten strengthener;
      wherein the dough additionally comprises System (d); wherein System (d) comprises at least one or more dough additives;
      wherein the gluten is vital gluten.
8. A dough comprising:
   System (a); and
   System (b);
      wherein System (a) comprises:
      (i) at least 80% (bakers' %) rye flour by weight of System (a) and
      (ii) at least 5% (bakers' %) exogeneous gluten by weight of System (a);
      wherein the dough is at a pH from about pH 5 to about pH 7.5;
      wherein System (b) comprises at least a leavening agent;
      wherein the dough additionally comprises System (c);
      wherein System (c) comprises at least one gluten strengthener selected from an emulsifier and/or an enzyme;
      wherein the dough additionally comprises System (d); wherein System (d) comprises at least one or more dough additives;
      wherein the gluten is vital gluten.

For any of these preferred aspects, preferably the leavening agent in System (b) is at least an exogeneous yeast.

For any of these preferred aspects, preferably the gluten strengthener in System (c) is at least a lipase and/or at least a xylanase and/or at least a hemicellulase and/or at least an oxidative enzyme and/or at least an oxidising agent and/or an emulsifier (in particular DATEM).

Various modifications and variations of the described aspects of the invention will be apparent to those skilled in the art without departing from the scope and spirit of the invention. Although the invention has been described in connection with specific preferred embodiments, it should be understood that the invention as claimed should not be unduly limited to such specific embodiments. Indeed, various modifications of the described modes of carrying out the invention which are obvious to those skilled in the relevant fields are intended to be within the scope of the following claims.

The invention is further described in the following numbered paragraphs.
1. A dough comprising:
   System (a); and
   System (b);
      wherein System (a) comprises
      (i) cereal flour, wherein at least 80% (bakers' %) of the cereal flour is rye flour; and
      (ii) exogenous gluten, wherein the exogeneous gluten is present in an amount of at least 5% (bakers' %) by weight of the cereal flour of System (a)(i);
      wherein the dough is at a pH from about pH 5 to about pH 7.5;
      wherein System (b) comprises at least a leavening agent;
      wherein if System (a)(ii) comprises from 5% (bakers' %) to 9% (bakers' %) by weight of the cereal flour of System (a)(i) of exogeneous gluten then the dough additionally comprises System (c);
      wherein System (c) comprises at least one gluten strengthener;
      wherein if System (a)(ii) comprises more than 9% (bakers' %) by weight of the cereal flour of System (a)(i) of exogeneous gluten then the dough optionally comprises System (c), wherein System (c) comprises at least one gluten strengthener.
2. A dough according to paragraph 1 wherein said dough does not contain an acidifier or a dough available acidifier.
3. A dough according to paragraph 1 or paragraph 2 wherein the dough comprises:
   said System (a);
   said System (b); and
   said System (c).
4. A dough according to any one of the preceding paragraphs wherein the dough additionally comprises System (d); wherein System (d) comprises at least one or more dough additives.
5. A dough according to paragraph 4 wherein the dough comprises:
   said System (a);
   said System (b); and
   said System (d).
6. A dough according to paragraph 4 wherein the dough comprises:
   said System (a);
   said System (b);
   said System (c); and
   said System (d).
7. A dough according to any one of the preceding paragraphs wherein the gluten in System (a)(ii) is or comprises Vital gluten.
8. A dough according to any one of the preceding paragraphs wherein the gluten in System (a)(ii) is Vital gluten.
9. A dough according to any one of the preceding paragraphs wherein the leavening agent in System (b) is at least an exogeneous yeast.
10. A dough according to any one of the preceding paragraphs wherein the leavening agent in System (b) is at least bakers yeast.
11. A dough according to any one of the preceding paragraphs wherein the gluten strengthener in System (c) is at least an emulsifier and/or an enzyme and/or a chemical oxidant.
12. A dough according to any one of the preceding paragraphs wherein the gluten strengthener in System (c) is at least a lipase and/or at least a xylanase and/or at least a hemicellulase and/or at least an oxidative enzyme and/or at least an oxidising agent.
13. A dough according to any one of the preceding paragraphs wherein the gluten strengthener in System (c) is at least a lipase.
14. A dough according to any one of the preceding paragraphs wherein the gluten strengthener in System (c) is at least a lipase and/or at least a phospholipase and/or at least a glycolipase.
15. A dough according to any one of the preceding paragraphs wherein the gluten strengthener in System (c) is at least DATEM.
16. A dough according to any one of the preceding paragraphs wherein System (d) comprises one or more of: water; salt; at least one enzyme; at least one flavouring; at least one delayed release acidifier; at least one type of kernel; at least one fruit piece; at least one type of shortening; at least one type of cereal grain and/or at least one hydrocolloid and/or at least one emulsifier and/or at least one type of fat and/or at least one sugar and/or at least one anti-staling agent and/or at least one softening agent.
17. A dough according to any one of the preceding paragraphs wherein System (d) comprises at least one hydrocolloid.
18. A dough according to paragraph 16 or paragraph 17 wherein the hydrocolloid is xanthan.
19. A dough according to any one of the preceding paragraphs wherein System (d) comprises at least one delayed release acidifier.
20. A dough according to paragraph 19 wherein the delayed release acidifier is at least one encapsulated acid.
21. A dough according to any one of the preceding paragraphs wherein System (d) comprises at least one emulsifier.
22. A dough according to paragraph 21 wherein the emulsifier is selected from the group consisting of distilled monoglycerides; monoglycerides; diglycerides; esters of mono- and diglycerides; polyglycerol esters of fatty acids; polyglycerol polyrincinoleate; propylene glycerol esters of fatty acids; sorbitan monostearates; sorbitan tristearates; sodium stearoyl lactylates; calcium stearoyl lactylates; lecithins; and diacetyl tartric acid esters of mono- and diglycerides and combinations thereof.
23. A dough according to paragraph 21 or paragraph 22 wherein the emulsifier is a monoglyceride.
24. A dough according to any one of paragraphs 21 to 23 wherein the emulsifier is a crumb softening emulsifier.
25. A dough according to any one of the preceding paragraphs wherein System (a)(i) comprises at least 82% (bakers' %) rye flour.
26. A dough according to any one of the preceding paragraphs wherein System (a)(i) comprises at least 84% (bakers' %) rye flour.
27. A dough according to any one of the preceding paragraphs wherein System (a)(i) comprises at least 86% (bakers' %) rye flour.
28. A dough according to any one of the preceding paragraphs wherein System (a)(i) comprises at least 88% (bakers' %) rye flour.
29. A dough according to any one of the preceding paragraphs wherein System (a)(i) comprises at least 90% (bakers' %) rye flour.
30. A dough according to any one of the preceding paragraphs wherein System (a)(i) comprises at least 92% (bakers' %) rye flour.
31. A dough according to any one of the preceding paragraphs wherein System (a)(i) comprises at least 94% (bakers' %) rye flour.
32. A dough according to any one of the preceding paragraphs wherein System (a)(i) comprises at least 96% (bakers' %) rye flour.
33. A dough according to any one of the preceding paragraphs wherein System (a)(i) comprises at least 98% (bakers' %) rye flour.
34. A dough according to any one of the preceding paragraphs wherein System (a)(i) comprises 100% (bakers' %) rye flour.
35. A dough according to any one of the preceding paragraphs wherein System (a)(ii) comprises at least 6% (bakers' %) by weight of the cereal flour of System (a)(i) of gluten.
36. A dough according to any one of the preceding paragraphs wherein System (a)(ii) comprises at least 8% (bakers' %) by weight of the cereal flour of System (a)(i) of gluten.
37. A dough according to any one of the preceding paragraphs wherein System (a)(ii) comprises at least 10% (bakers' %) by weight of the cereal flour of System (a)(i) of gluten.
38. A dough according to any one of the preceding paragraphs wherein the dough is at a pH from about pH 5.5 to about pH 7.
39. A process of making a dough according to any one of paragraphs 1 to 38 comprising admixing System (a)(i) as defined in any one of the preceding paragraphs with System (a)(ii) as defined in any one of the preceding paragraphs with System (b) as defined in any one of the preceding paragraphs, optionally with System (c) as defined in any one of the preceding paragraphs and/or optionally with System (d) as defined in any one of the preceding paragraphs to form said dough.
40. A process according to paragraph 39 further comprising pre-forming System (a)(i) as defined in any one of the preceding paragraphs and/or pre-forming System (a)(i) as defined in any one of the preceding paragraphs and/or System (b) as defined in any one of the preceding paragraphs and/or System (c) as defined in any one of the preceding paragraphs and/or System (d) as defined in any one of the preceding paragraphs.
41. A process according to paragraph 39 or paragraph 40 comprising baking said dough.
42. A bakery product made from the dough according to any one of paragraphs 1 to 3 or from the product of the process of paragraph 39 or paragraph 40 or paragraph 41.
43. A bakery product according to paragraph 42 wherein the bakery product is a baked product.
44. A bakery product according to paragraph 42 or paragraph 43 wherein the bakery product is bread.
45. A dough comprising:
   System (a);
   System (b);
   optional System (c); and
   System (d);
      wherein System (a) comprises:
      (i) rye flour and
      (ii) gluten;
      wherein System (b) comprises at least a leavening agent;
      wherein if System (a)(ii) comprises from 5% (bakers' %) to 9% (bakers' %) by weight of the cereal flour of System (a)(i) of exogeneous gluten then the dough additionally comprises System (c), wherein System (c) comprises at least one gluten strengthener; and wherein if System (a) comprises more than 9% (bakers' %) by weight of the cereal flour of System (a)(i) of exogeneous gluten then the dough optionally comprises System (c), wherein System (c) comprises at least one gluten strengthener; and
      wherein System (d) comprises an encapsulated acidifier.
46. A dough according to paragraph 45 wherein the dough is at a pH from about pH 5 to about pH 7.5.
47. A dough according to paragraph 45 or paragraph 46 wherein said dough does not contain an acidifier or a dough available acidifier.
48. A dough according to paragraph 45 or any paragraph dependent thereon wherein the dough comprises:
   said System (a);
   said System (b);
   said System (c); and
   said System (d).
49. A dough according to paragraph 45 or any paragraph dependent thereon wherein System (a) is as defined in any one of paragraphs 1 to 44.
50. A dough according to paragraph 45 or any paragraph dependent thereon wherein System (b) is as defined in any one of paragraphs 1 to 43.
51. A dough according to paragraph 45 or any paragraph dependent thereon wherein System (c) is as defined in any one of paragraphs 1 to 43.
52. A dough according to paragraph 45 or any paragraph dependent thereon wherein System (d) is as defined in any one of paragraphs 1 to 43.
53. A process of making a dough according to paragraph 45 or any paragraph dependent thereon comprising admixing System (a)(i) as defined in any one of the preceding paragraphs with System (a)(ii) as defined in any one of the preceding paragraphs- with System (b) as defined in any one of the preceding paragraphs, with System (d) as defined in any one of the preceding paragraphs and/or optionally with System (c) as defined in any one of the preceding paragraphs to form said dough.
54. A process according to paragraph 53 further comprising pre-forming System (a)(i) as defined in any one of the preceding paragraphs and/or System (a)(ii) as defined in any one of the preceding paragraphs and/or System (b) as defined in any one of the preceding paragraphs and/or System (c) as defined in any one of the preceding paragraphs and/or System (d) as defined in any one of the preceding paragraphs.
55. A process according to paragraph 53 or paragraph 54 comprising baking said dough.
56. A bakery product made from the dough according to paragraph 45 or any paragraph dependent thereon or from the product of paragraph 53 or paragraph 54 or paragraph 55.
57. A bakery product according to paragraph 56 wherein the bakery product is a baked product.
58. A bakery product according to paragraph 56 or paragraph 57 wherein the bakery product is bread.
59. The use of an emulsifier in the preparation of a dough comprising rye flour.
60. The use according to paragraph 59 wherein the dough is the dough defined in paragraph 1 or any paragraph dependent thereon.
61. The use according to paragraph 59 or paragraph 60 wherein the emulsifier is the emulsifier defined in paragraph 1 or any paragraph dependent thereon.
62. A rye flour bakery product and/or a rye flour baked product that has a TPA value of about 20 to 30 HPa up to 1 day after production.
63. A rye toast bread made from the dough according to any one of the preceding paragraphs.
64. A dough substantially as described herein.
65. A process substantially as described herein.
66. A bakery product substantially as described herein.
67. A baked product substantially as described herein.

## Claims

1. A dough comprising:
System (a);
System (b);
optional System (c); and
System (d);
wherein System (a) comprises:
(iii) rye flour and
(iv) gluten;
wherein System (b) comprises at least a leavening agent; wherein if System (a)(ii) comprises from 5% (bakers' %) to 9% (bakers' %) by weight of the cereal flour of System (a)(i) of exogeneous gluten then the dough additionally comprises System (c), wherein System (c) comprises at least one gluten strengthener; and wherein if System (a) comprises more than 9% (bakers' %) by weight of the cereal flour of System (a)(i) of exogeneous gluten then the dough optionally comprises System (c), wherein System (c) comprises at least one gluten strengthener; and
wherein System (d) comprises an encapsulated acidifier.

2. A dough according to claim 1 wherein the dough is at a pH from about pH 5 to about pH 7.5.

3. A dough according to claim 1 or claim 2 wherein said dough does not contain an acidifier or a dough available acidifier.

4. A dough according to claim 1 or any claim dependent thereon wherein the dough comprises:
said System (a);
said System (b);
said System (c); and
said System (d).

5. A dough according to claim 1 or any claim dependent thereon wherein System (a) is as defined in claim 1.

6. A dough according to claim 1 or any claim dependent thereon wherein System (b) is as defined in claim 1.

7. A dough according to claim 1 or any claim dependent thereon wherein System (c) is as defined in claim 1.

8. A dough according to claim 1 or any claim dependent thereon wherein System (d) is as defined in claim 1.

9. A process of making a dough according to claim 1 or any claim dependent thereon comprising admixing System (a)(i) as defined in any one of the preceding claims with System (a)(ii) as defined in any one of the preceding claims with System (b) as defined in any one of the preceding claims, with System (d) as defined in any one of the preceding claims and/or optionally with System (c) as defined in any one of the preceding claims to form said dough.

10. A process according to claim 9 further comprising pre-forming System (a)(i) as defined in any one of the preceding claims and/or System (a)(ii) as defined in any one of the preceding claims and/or System (b) as defined in any one of the preceding claims and/or System (c) as defined in any one of the preceding claims and/or System (d) as defined in any one of the preceding claims.

11. A process according to claim 9 or claim 10 comprising baking said dough.

12. A bakery product made from the dough according to claim 1 or any claim dependent thereon or from the product of claim 9 or claim 10 or claim 11.

13. A bakery product according to claim 12 wherein the bakery product is a baked product.

14. A bakery product according to claim 12 or claim 13 wherein the bakery product is bread.

15. The use of an emulsifier in the preparation of a dough comprising rye flour.

16. The use according to claim 15 wherein the dough is the dough defined in claim 1 or any claim dependent thereon.

17. The use according to claim 15 or claim 16 wherein the emulsifier is the emulsifier defined in claim 1 or any claim dependent thereon.

18. A rye flour bakery product and/or a rye flour baked product that has a TPA value of about 20 to 30 HPa up to 1 day after production.
